# EUROPEAN PATENT APPLICATION

(11) **EP 4 542 977 A1**
(43) Date of publication of application: **23.04.2025**
(21) Application number: 23868298.3
(22) Date of filing: 22.03.2023
(51) Int. Cl.: H04M 1/72454, H04M 1/72403, H04M 1/02, G06F 3/041, G06F 3/048

(54) **ELECTRONIC DEVICE FOR RECONSTRUCTING BACKGROUND IMAGE**

(30) Priority: 19.09.2022 KR 20220117805; 04.10.2022 KR 20220126049
(71) Applicant: Samsung Electronics Co., Ltd., Suwon-si, Gyeonggi-do 16677 (KR)
(72) Inventor: SHIN, Kihan, Suwon-si, Gyeonggi-do 16677 (KR); LEE, Goun, Suwon-si, Gyeonggi-do 16677 (KR); LEE, Wonchang, Suwon-si, Gyeonggi-do 16677 (KR)
(74) Representative: Gulde & Partner
(86) International application number: PCT/KR2023/003777
(87) International publication number: WO 2024/063232

(57) **Abstract**

This electronic device may comprise: a housing of the electronic device; a display disposed in the housing; a posture sensor for generating data used to recognize the posture of the electronic device; a processor operatively connected to the posture sensor and the display; and a memory for storing an application, operatively connected to the processor. The processor may carry out the operations of: displaying a first background image in a first background image display area configured to display a background image in a display area activated to display visual information on the display; monitoring, on the basis of data received from the posture sensor, whether the posture of the electronic device has changed from a first posture corresponding to a portrait mode to a second posture corresponding to a landscape mode, or from the second posture to the first posture; monitoring whether there is a visual change in the execution screen of an application in the activated display area; on the basis of recognizing, as a result of the monitoring, a change in the posture of the electronic device or a visual change in the execution screen of an application, configuring a second background image display area, which has a reduced size compared to the first background image display area, in the activated display area; reconstructing a second background image from the first background image, so that the second background image can be displayed in the second background image display area; and displaying the second background image in the second background image display area.

## Description

### [Technical Field]

The disclosure relates to an electronic device for reconstructing an image used as a background on a screen of an electronic device.

### [Background Art]

Various types of images may be applied as background images on the screen (e.g., home screen or lock screen) of an electronic device. For example, an image generated by a camera of an electronic device may be configured as a background image. The electronic device may change the background image according to a specified criterion. For example, the background image may be changed every time a predetermined period of time elapses or every time the display is turned off and then on again.

### [Disclosure of Invention]

### [Technical Problem]

If an application is executed on an electronic device, an image configured as a background on the screen of the electronic device may be covered by the application execution screen. Accordingly, it may be difficult for a user to fully view the background image.

The embodiment of the disclosure may provide an electronic device that enables a user to fully view a background image by repositioning the background image in an area (hereinafter, a blank area) not covered by the application execution screen. The technical problems to be solved in the disclosure are not limited to the technical problems mentioned above, and other technical problems not mentioned may be clearly understood by those skilled in the art to which the present invention belongs from the description below.

### [Solution to Problem]

According to an embodiment, an electronic device may include: a housing of the electronic device; a display disposed in the housing; a posture sensor configured to generate data used to recognize a posture of the electronic device; a processor operatively connected to the posture sensor and the display; and a memory operatively connected to the processor and configured to store an application. The memory may store instructions that cause, when executed, the processor to perform operations. The instructions may cause the processor to display a first background image in a first background image display area configured to display a background image in a display area activated to display visual information on the display. The instructions may cause the processor to monitor whether the posture of the electronic device changes from a first posture corresponding to a portrait mode to a second posture corresponding to a landscape mode or changes from the second posture to the first posture, based on data received from the posture sensor. The instructions may cause the processor to monitor whether there is a visual change in an execution screen of the application in the activated display area. The instructions may cause the processor to configure a second background image display area having a size reduced from that of the first background image display area in the activated display area, based on recognizing a change in the posture of the electronic device or a visual change in the application execution screen as a result of the monitoring. The instructions may cause the processor to reconstruct the first background image into a second background image to be displayed in the second background image display area. The instructions may cause the processor to display the second background image in the second background image display area.

According to an embodiment, a method for operating an electronic device may include displaying a first background image in a first background image display area configured to display a background image in a display area activated to display visual information on a display of the electronic device. The method may include monitoring whether a posture of the electronic device changes from a first posture corresponding to a portrait mode to a second posture corresponding to a landscape mode or changes from the second posture to the first posture, based on data received from a sensor provided in the electronic device. The method may include monitoring whether there is a visual change in an execution screen of an application in the activated display area. The method may include configuring a second background image display area having a size reduced from that of the first background image display area in the activated display area, based on recognizing a change in the posture of the electronic device or a visual change in the application execution screen as a result of the monitoring. The method may include reconstructing the first background image into a second background image to be displayed in the second background image display area. The method may include displaying the second background image in the second background image display area.

### [Advantageous Effects of Invention]

According to various embodiments, the electronic device may enable the user to fully view the background image while using the application. In addition, various effects that may be directly or indirectly understood through this document may be provided.

### [Brief Description of Drawings]

FIG. 1 is a block diagram of an electronic device in a network environment according to various embodiments.
FIG. 2 is an exploded perspective view of an electronic device having a bar-type housing structure according to an embodiment.
FIGS. 3A to 3F illustrate an electronic device having a foldable housing structure in an in-folding manner according to an embodiment.
FIGS. 4A to 4D illustrate an electronic device having a slidable housing structure according to an embodiment.
FIG. 5 is a block diagram of an electronic device according to an embodiment.
FIG. 6 is a diagram illustrating connections between modules configured in an electronic device 500.
FIG. 7 is a flowchart illustrating operations for providing a background image service to a user according to an embodiment.
FIGS. 8A and 8B are diagrams illustrating an operation for reconstructing a tile-type background image.
FIGS. 9A and 9B are diagrams illustrating an operation for reconstructing an object-type background image.
FIG. 10A and FIG. 10B are diagrams illustrating operations for reconstructing a landscape-type background image.
FIG. 11 is a diagram illustrating a screen layer structure according to an embodiment.
FIG. 12 is a diagram illustrating connections among an application monitoring module, a background image display area reconfiguration module, and a background image service module according to an embodiment.
FIG. 13 is a flowchart illustrating operations for managing a database related to a background image display area according to an embodiment.
FIG. 14 is a diagram illustrating connections among a posture monitoring module, a status monitoring module, a background image display area reconfiguration module, and a background image service module according to an embodiment.
FIG. 15 is a flowchart illustrating operations for managing a database related to a background image display area according to an embodiment.
FIG. 16 is a diagram illustrating connections among a background image monitoring module, a feature extraction module, a background image reconstruction module, and a background image service module according to an embodiment.
FIG. 17 is a flowchart illustrating operations for managing a database in relation to extracting feature information of a background image according to an embodiment.

### [Mode for the Invention]

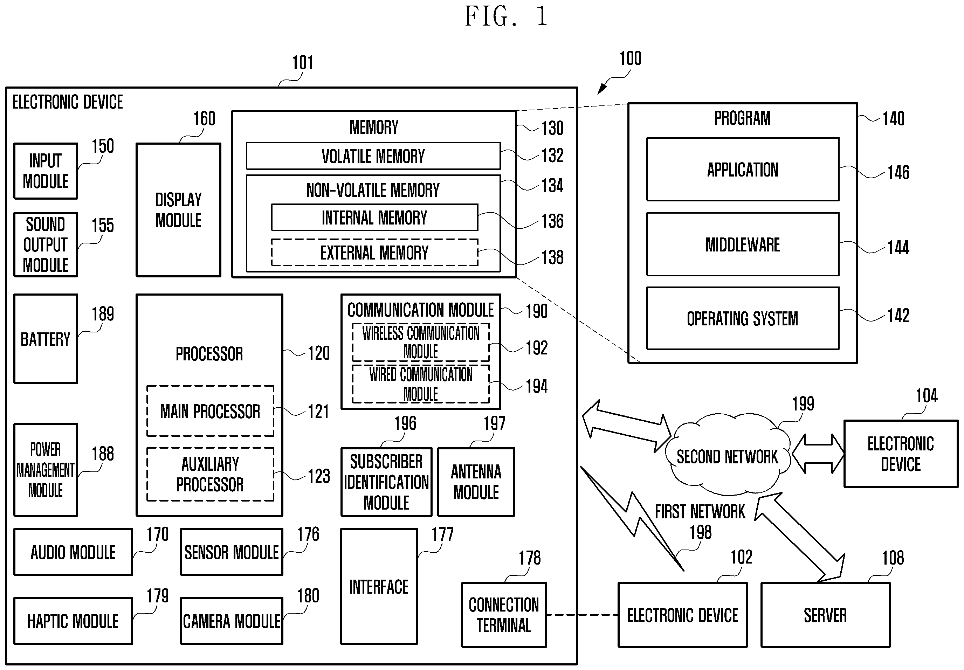

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Hereinafter, for the convenience of explanation, the surface of the display (e.g., flexible display) that is visually exposed to the user may be referred to as a front surface of the electronic device 101. In addition, the surface opposite the front surface may be referred to as a rear surface of the electronic device 101. In addition, the surface surrounding the space between the front surface and the rear surface may be referred to as a side surface of the electronic device 101. The term "state" may refer to the structural form, posture, or shape of the electronic device 101 (or a display, slider, or housing constituting the electronic device 101). In addition, in this document, the term "state" may be used as a term indicating whether software (e.g., an application) is being executed, whether the execution screen of the corresponding software is being displayed on the display, or whether the position of the execution screen changes on the display.

A bar-type housing structure may be applied to the electronic device (e.g., a smartphone or a tablet PC) 101. For example, the bar-type housing structure may include a plate (or cover) forming the front surface of the electronic device 101, a plate forming the rear surface of the electronic device 101, and a bezel structure forming a side surface surrounding the front and rear surfaces. A display may be disposed on the front surface.

A foldable housing structure may be applied to the electronic device (e.g., a smartphone, a tablet PC, a notebook PC) 101. For example, the electronic device 101 may have a foldable housing structure in which the housing is divided into two parts with respect to a folding axis. A first display area of a display (e.g., a flexible display) may be disposed in a first housing, and a second display area of the display may be disposed in a second housing. The foldable housing structure may be implemented in an in-folding manner in which the first display area and the second display area face each other when the electronic device 101 is in a folded state. Alternatively, the foldable housing structure may be implemented in an out-folding manner in which the first display area and the second display area face opposite to each other when the electronic device 101 is in a folded state.

A slidable (or rollable) housing structure may be applied to the electronic device (e.g., a smartphone, a tablet PC, a notebook PC) 101. The electronic device 101 may include a slidable housing that includes a housing (or a first housing) and a slider (or a second housing), a rail structure (e.g., a rail structure with a gear combination between a rack gear and a pinion gear) that causes the slider to slide into the housing and slide out from the housing, and a rollable display (e.g., a flexible display). The slider may be divided into a part (hereinafter, a slide-in part) that may slide into the housing and a part that is kept exposed outside. The entire display (or most of the display area) may be exposed to the outside through the front surface in a slide-out state in which the entirety of the slide-in part of the slider slides out from the housing (in other words, in a first state, open state, extended state, or roll-out state). As the slide-in part of the slider slides into the housing, the display may also be received inside the housing. The display may also be divided into a part (e.g., a first display area or a first section) that is kept exposed outside and a part (e.g., a second display area, a second section, or a bendable section) that may slide into the housing. When switching to a slide-in state (in other words, in a second state, closed state, reduced state, or roll-in state) in which the entirety of the slide-in part of the slider slides into the housing, the entire second display area of the display may be received inside the housing. In an embodiment, when switching from the slide-out state to the slide-in state, a portion (e.g., the second display area) of the display may move to the rear surface via the side surface, instead of sliding into the housing. As exemplified above, the electronic device 101 may have a sliding structure in which a portion of the display slides into the housing or a sliding structure in which a portion of the display moves from the front surface to the rear surface. In the display, only a portion exposed through the front surface may be determined as an activated display area (hereinafter, an active area) for displaying visual information. The portion that slides into the housing or moves to the rear surface may be determined as an inactive area in which no visual information is displayed.

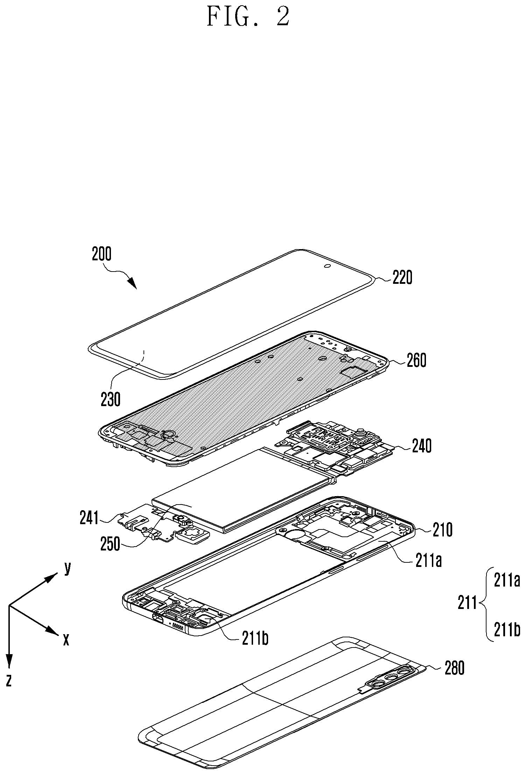

FIG. 2 is an exploded perspective view of an electronic device 300 having a bar-type housing structure according to an embodiment.

Referring to FIG. 2, the electronic device 200 (e.g., the electronic device 101 in FIG. 1) may include a side surface bezel structure (or side frame) 210, a first support member (or first support frame) 211, a front cover (or window) 220, a display 230 (e.g., the display module 160 in FIG. 1), one or more printed circuit boards 240 and 241, a battery 250 (e.g., the battery 189 in FIG. 1), a second support member (or second support frame) 260, and a rear cover 280. The front cover 220 may form a first surface (or front surface) of the electronic device 200 facing in a first direction, and the rear cover 280 may form a second surface (or rear surface) of the electronic device 200 facing in a second direction opposite the first direction. The side surface bezel structure 210 may be made of a combination of metal (e.g., SUS) and polymer. The side surface bezel structure 210 may form a side surface surrounding a space between the first surface and the second surface. According to an embodiment, a structure including the first surface, the second surface, and the side surface may be referred to as a housing (or housing structure).

The printed circuit boards 240 and 241 may be disposed to be supported by the first support member 211 and/or the second support member 260. The first support member 211 may be coupled to the side surface bezel structure 210. The first support member 211 may include a structure (e.g., metal or polymer) extending from the side surface bezel structure 210. The first support member 211 may be formed of, for example, a metal and/or non-metal material (e.g., polymer). The display 230 may be coupled to one side of the second support member 260 and a printed circuit board 240 or 241 may be coupled to the other side. A processor 120, a memory 130, and/or an interface 177 may be mounted on the printed circuit boards 240 and 241. According to an embodiment, the printed circuit boards 240 and 241 may include a main board 240 and a sub-board 241. The first support member 211 may include a main substrate support member 211a that supports the main substrate 240 and a sub-substrate support member 211b that supports the sub-board 241. The battery 250 may be disposed to be supported by the first support member 211 and/or the second support member 260.

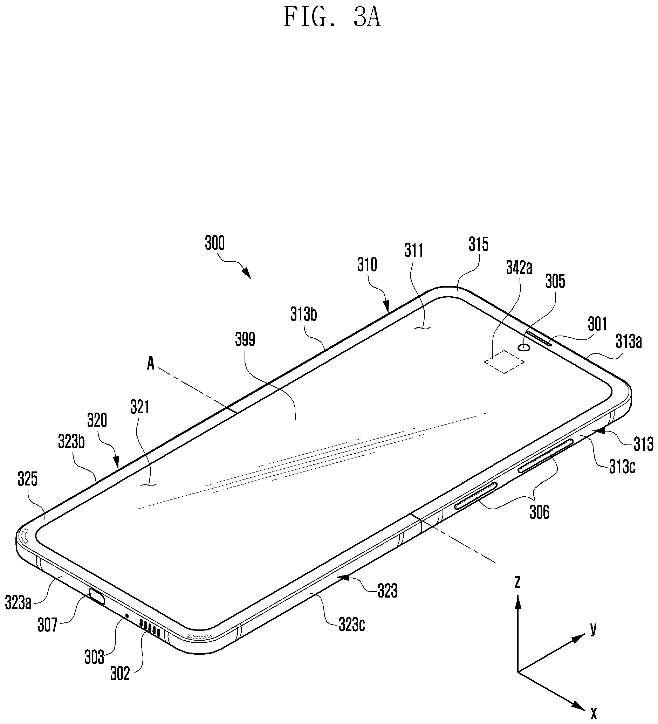

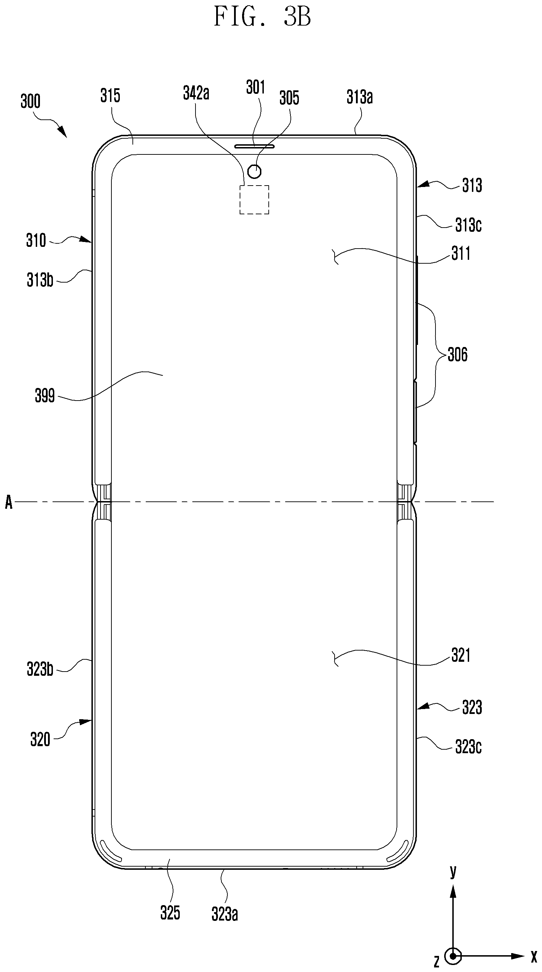

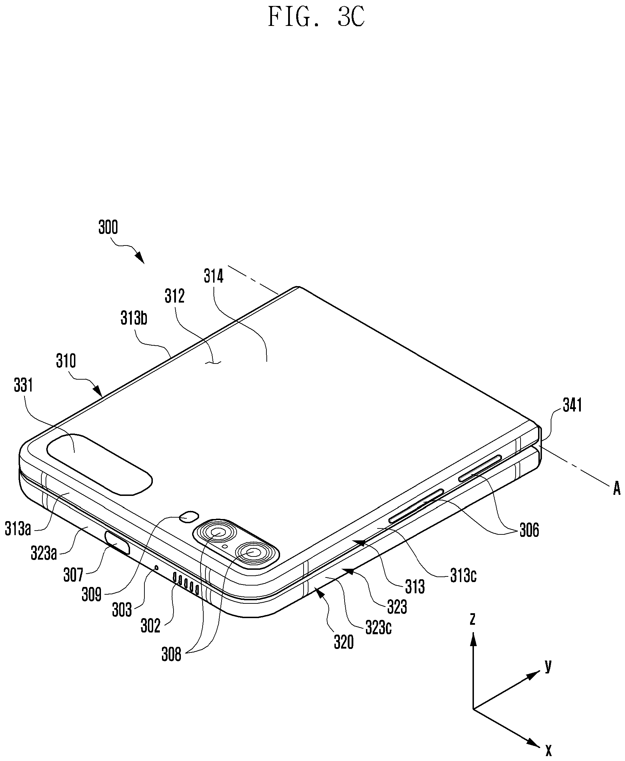

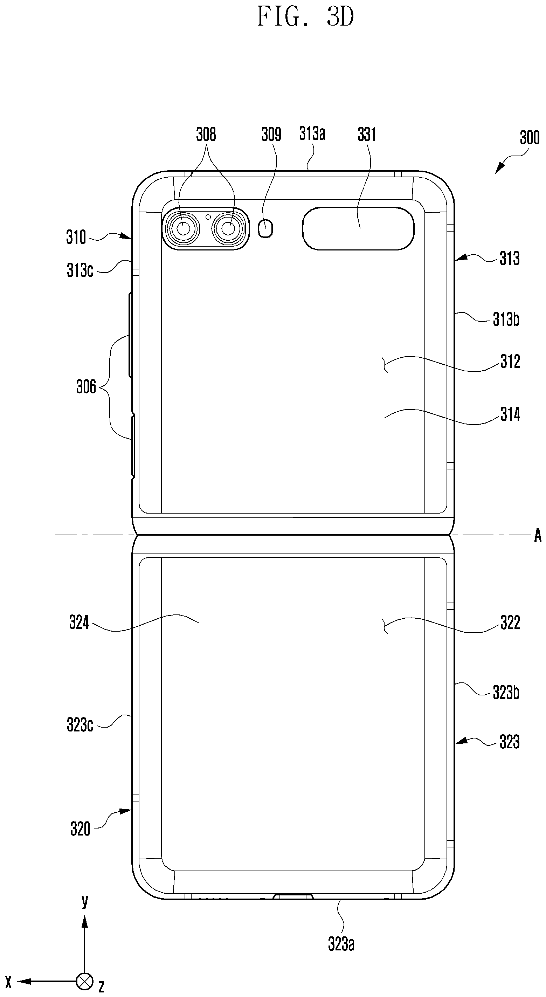

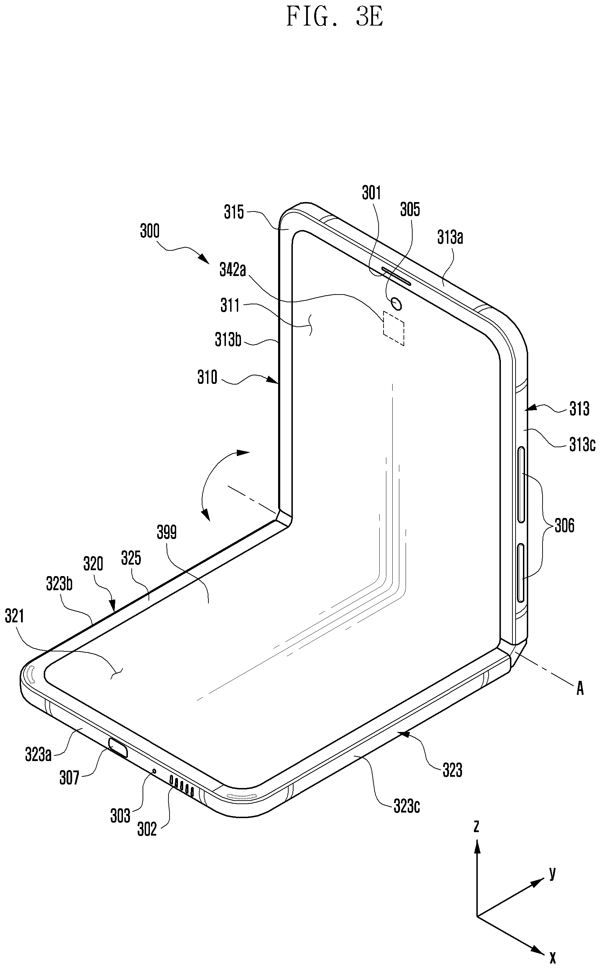

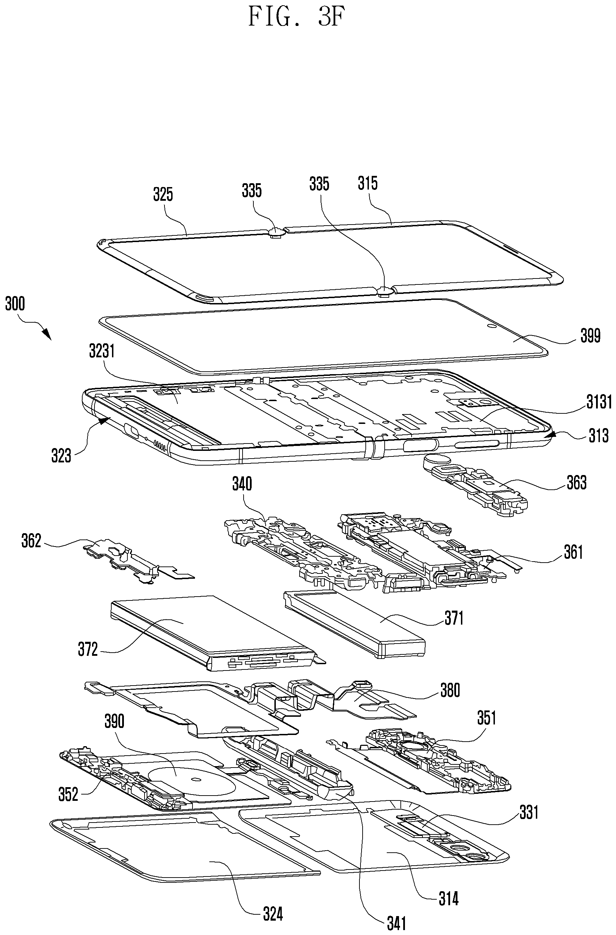

FIGS. 3A to 3F illustrate an electronic device 300 having a foldable housing structure in an in-folding manner according to an embodiment. Specifically, FIGS. 3A and 3B illustrate the front surface of the electronic device 300 in an unfolded (flat, or open) state, FIG. 3C illustrates the rear surface of the electronic device 300 in a folded (or closed) state, FIG. 3D illustrates the rear surface of the electronic device 300 in an unfolded state, FIG. 3E illustrates the front surface of the electronic device 300 in a partially folded state (in other words, a partially unfolded state or an intermediate state (free-stop state) between a fully folded state and a fully unfolded state), and FIG. 3F is an exploded perspective view of the electronic device 300.

Referring to FIGS. 3A to 3F, the electronic device 300 (e.g., the electronic device 101 in FIG. 1) may include a foldable housing that includes a first housing 310, a second housing 320, and a hinge assembly 340 connecting the first housing 310 and the second housing 320 such that the second housing 320 is rotatable relative to the first housing 310. The electronic device 300 may include a flexible or foldable display 399 and a sensor module (e.g., the sensor module 176 in FIG. 1) disposed in a space formed by the foldable housing 310 and, 320.

The display 399 may be disposed from the first housing 310 across the hinge assembly 340 to the second housing 320. The display 399 may be divided into a first display area 311 arranged in the internal space of the first housing 310 and a second display area 321 arranged in the internal space of the second housing 320, based on the folding axis A. The sensor module (e.g., a light sensor) may be disposed below the sensor area (or light transmitting area) 342a of the first display area 311 when viewed from the front. The position and/or size of the sensor area 342a within the first display area 311 may be determined by the position and/or size of an illuminance sensor provided below the same. For example, the size (e.g., diameter) of the sensor area 342a may be determined based on the field of view (FOV) of the illuminance sensor. In an embodiment, the sensor area 342a may be configured to have a lower pixel density and/or lower wiring density than surrounding areas in order to improve light transmittance.

The hinge assembly 340 may be implemented in an in-folding manner such that two display areas 311 and 321 face each other when the electronic device 300 switches from the unfolded state (e.g., the state in FIG. 3A) to the folded state (e.g., the state in FIG. 3C). For example, when the electronic device 300 is in the unfolded state, the two display areas 311 and 321 may face substantially in the same direction. As the electronic device switches from the unfolded state to the folded state, the two display areas 311 and 321 may rotate in a direction in which they face each other. The hinge assembly 340 may be configured so that the foldable housing 310 and 320 has a resistance to rotation. When an external force exceeding the resistance is applied to the foldable housing 310 and 320, the foldable housing 310 and 320 may rotate.

Based on an angle formed between the two display areas 311 and 321, the state of the electronic device 300 may be defined. For example, the state of the electronic device 300 may be defined as an unfolded (flat or open) state when the angle between the two display areas 311 and 321 is about 180 degrees. The state of the electronic device 300 may be defined as a folded (or closed) state when the angle between the two display areas 311 and 321 is between about 0 degrees and 10 degrees. When the two display areas 311 and 321 form an angle that is greater than the angle in the folded state and less than the angle in the unfolded state (e.g., between about 10 degrees and 179 degrees), the state of the electronic device 300 may be defined as an intermediate state (in other words, a partially folded or partially unfolded state) as illustrated in FIG. 3E.

Based on the state of the electronic device 300, an active area on which visual information (e.g., text, images, or icons) is to be displayed may be determined on the display 399. For example, when the electronic device 300 is in the intermediate state, the processor 120 may determine both or one of the first display area 311 and the second display area 321 as the active area. The processor 120 may determine the first display area 311 or the second display area 321, which has relatively less movement, as an active area. For example, when a user holds the housing of the electronic device 300 with one hand and opens another housing with a finger (e.g., thumb) of the same hand or with the other hand, the processor 120 may switch from the folded state to the intermediate state, and accordingly, the electronic device 300 may determine the display area of the held housing (e.g., the housing with relatively less movement) as an active area. When the electronic device 300 is in the unfolded state, the entire display area of the display 399 (both the first display area 311 and the second display area 321) may be determined as an active area.

According to an embodiment, in the unfolded state, the first housing 310 may include a first surface (first display area) 311 facing in a first direction (e.g., the front direction) (z-axis direction) and a second surface 312 facing in a second direction (e.g., the rear direction) (-z-axis direction) opposite the first surface 311. In the unfolded state, the second housing 320 may include a third surface (second display area) 321 facing in the first direction (e.g., z-axis direction) and a fourth surface 322 facing in the second direction (e.g., -z-axis direction). The electronic device 300 may be operated in such a way that the first surface 311 of the first housing 310 and the third surface 321 of the second housing 320 face in the same first direction (e.g., z-axis direction) in the unfolded state and that the first surface 311 and the third surface 321 face each other in the folded state. The electronic device 300 may be operated in such a way that the second surface 312 of the first housing 310 and the fourth surface 322 of the second housing 320 face in the same second direction (-z-axis direction) in the unfolded state and that the second surface 312 and the fourth surface 322 face in opposite directions to each other in the folded state.

According to an embodiment, the first housing 310 may include a first side frame 313 that forms at least partially the appearance of the electronic device 300 and a first rear cover 314 that is coupled to the first side frame 313 and forms at least a portion of the second surface 312 of the electronic device 300. According to an embodiment, the first side frame 313 may include a first side surface 313a, a second side surface 313b that extends from one end of the first side surface 313a, and a third side surface 313c that extends from the other end of the first side surface 313a. According to an embodiment, the first side frame 313 may be formed into a rectangular (e.g., square or quadrangular) shape by the first side surface 313a, the second side surface 313b, and the third side surface 313c.

According to an embodiment, the second housing 320 may include a second side frame 323 that forms at least partially the appearance of the electronic device 300 and a second rear cover 324 that is coupled to the second side frame 323 and forms at least a portion of the fourth surface 322 of the electronic device 300. According to an embodiment, the second side frame 323 may include a fourth side surface 323a, a fifth side surface 323b that extends from one end of the fourth side surface 323a, and a sixth side surface 323c that extends from the other end of the fourth side surface 323a. According to an embodiment, the second side frame 323 may be formed into a rectangular shape by the fourth side surface 323a, the fifth side surface 323b, and the sixth side surface 323c.

According to an embodiment, the electronic device 300 may include a first protective cover 315 (e.g., a first protective frame or a first decorative member) coupled along the edge of the first housing 310. The electronic device 300 may include a second protective cover 325 (e.g., a second protective frame or a second decorative member) coupled along the edge of the second housing 320.

According to an embodiment, the electronic device 300 may include a sub-display 331 disposed separately from the display 399. The sub-display 331 may be disposed to be at least partially exposed through the second surface 312 of the first housing 310, thereby displaying state information of the electronic device 300 in the folded state. The sub-display 331 may be disposed to be visible from the outside through at least a portion of the first rear cover 314. In a certain embodiment, the sub-display 331 may be disposed on the fourth surface 322 of the second housing 320. In this case, the sub-display 331 may be disposed to be visible from the outside through at least a portion of the second rear cover 324.

According to an embodiment, the electronic device 300 may include at least one of an input device 303, an audio output device 301 and 302, camera modules 305 and 308, a key input device 306, a connector port 307, and a sensor module (not shown). The sensor module (e.g., the sensor module 176 in FIG. 1) and the camera 305 may be disposed below the display 399 when viewed from the front.

According to an embodiment, the electronic device 300 may be operated to maintain the intermediate state using the hinge assembly 340. In this case, the electronic device 300 may display different content on the first display area corresponding to the first surface 311 and the second display area corresponding to the third surface 321. For example, the processor 120 of the electronic device 300 may control the display 399 to display an application execution screen on the first display area and a background image on the second display area.

Referring to FIG. 3F, the electronic device 300 may include a first side frame 313, a second side frame 323, and a hinge assembly 340 that rotatably connects the first side frame 313 and the second side frame 323. According to an embodiment, the electronic device 300 may include a first support plate 3131 that extends at least partially from the first side frame 313, and a second support plate 3231 that extends at least partially from the second side frame 323. According to an embodiment, the first support plate 3131 may be integrally formed with the first side frame 313 or structurally coupled to the first side frame 313. Similarly, the second support plate 3231 may be integrally formed with the second side frame 323 or structurally coupled to the second side frame 323. According to an embodiment, the electronic device 300 may include a display 399 that is disposed to be supported by the first support plate 3131 and the second support plate 3231. According to an embodiment, the electronic device 300 may include a first rear cover 314 coupled to the first side frame 313 and providing a first space between the first rear cover 314 and the first support plate 3131, and a second rear cover 324 coupled to the second side frame 323 and providing a second space between the second side frame 323 and the second support plate 3231. In a certain embodiment, the first side frame 313 and the first rear cover 314 may be formed integrally. In a certain embodiment, the second side frame 323 and the second rear cover 324 may be formed integrally. According to an embodiment, the electronic device 300 may include a first housing 310 provided through the first side frame 313, the first support plate 3131, and the first rear cover 314. According to an embodiment, the electronic device 300 may include a second housing 320 provided through the second side frame 323, the second support plate 3231, and the second rear cover 324.

Although not shown, the hinge assembly 340 may include a first arm structure coupled to the first housing 310 (e.g., the first support plate 3131), a second arm structure coupled to the second housing 320 (e.g., the second support plate 3231), and a detent structure in physical contact with the first arm structure and the second arm structure such that the first housing 310 and the second housing 320 have a resistance to rotation. The foldable housing 310 and 320 may have a resistance to rotation due to the contact force of the detent structure (e.g., the force pushing the first arm structure and the second arm structure).

According to an embodiment, the electronic device 300 may include a first board assembly 361 (e.g., a main printed circuit board), a camera assembly 363, a first battery 371, or a first bracket 351 disposed in a first space between the first side frame 313 and the first rear cover 314. According to an embodiment, the camera assembly 363 may include a plurality of cameras (e.g., the camera modules 305 and 308 in FIGS. 3A and 3C) and may be electrically connected to the first board assembly 361. According to an embodiment, the first bracket 351 may provide a support structure and improved rigidity for supporting the first board assembly 361 and/or the camera assembly 363. According to an embodiment, the electronic device 300 may include a second board assembly 362 (e.g., a sub-printed circuit board), an antenna 390 (e.g., a coil member), a second battery 372, or a second bracket 352 disposed in a second space between the second side frame 323 and the second rear cover 324. According to an embodiment, the electronic device 300 may include a wire member 380 (e.g., a flexible printed circuit board (FPCB)) that is disposed to extend from the first board assembly 361 across the hinge assembly 340 to a plurality of electronic components (e.g., the second board assembly 362, the second battery 372, or the antenna 390) disposed between the second side frame 323 and the second rear cover 324 and provides electrical connections.

According to an embodiment, the electronic device 300 may include a hinge cover 341 that supports the hinge assembly 340 and is configured to be exposed to the outside when the electronic device 300 is in the folded state and to be received inside the first space and the second space when the electronic device 300 is in the unfolded state so as not to be visible from the outside.

According to an embodiment, the electronic device 300 may include a first protective cover 315 coupled along the edge of the first side frame 313. According to an embodiment, the electronic device 300 may include a second protective cover 325 coupled along the edge of the second side frame 323. In the display 399, the edge of the first display area 311 may be protected by the first protective cover 315. The edge of the second display area 321 may be protected by the second protective cover 325. A protective cap 335 may be disposed in an area corresponding to the hinge assembly 340 so as to protect a portion that is bent at the edge of the display 399.

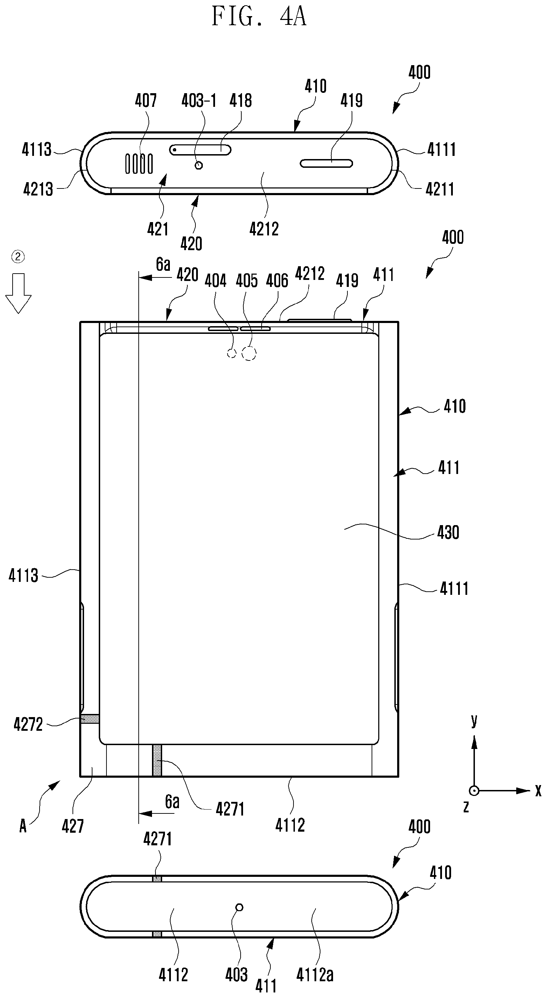

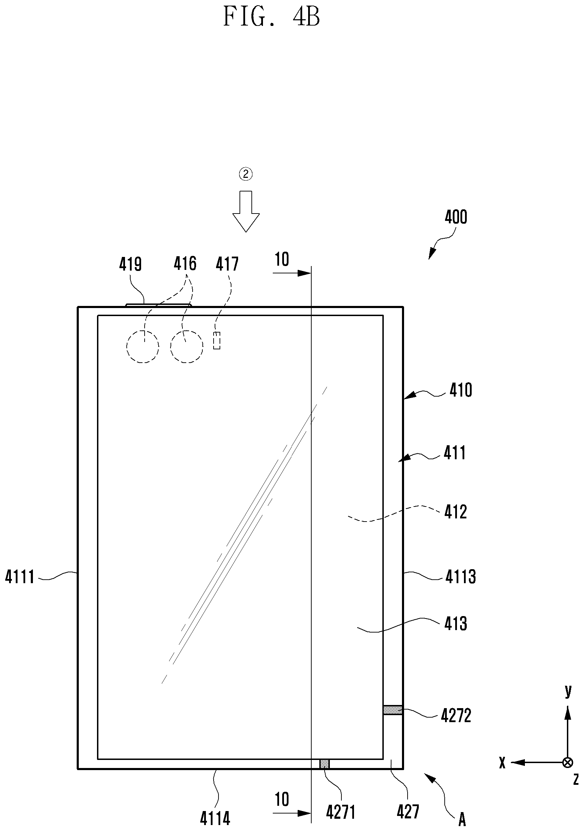

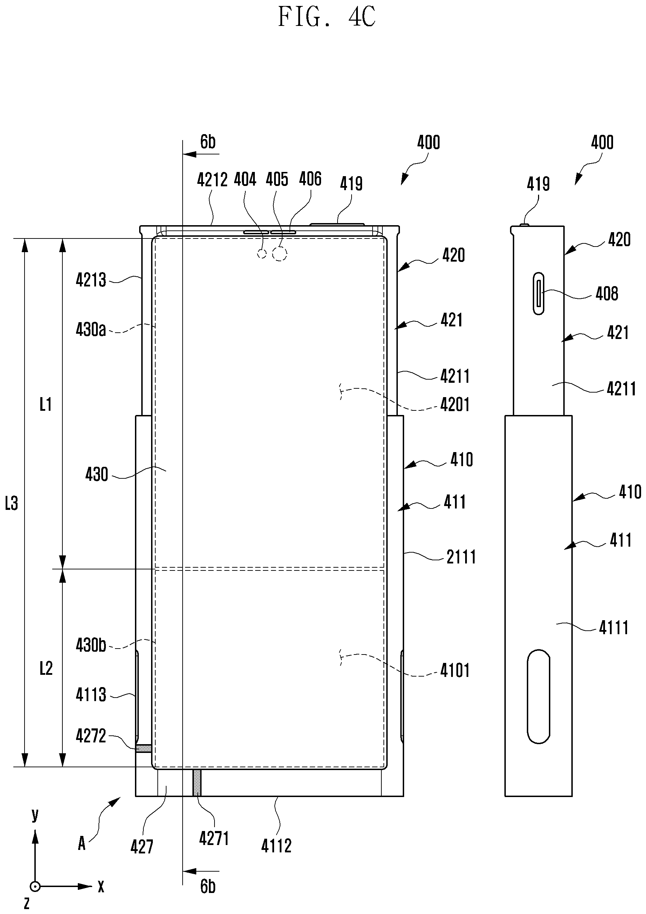

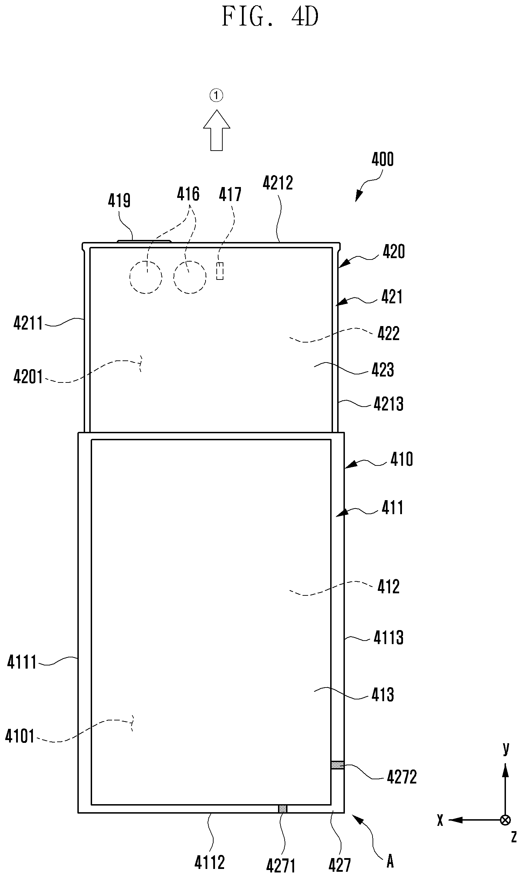

FIGS. 4A to 4D illustrate an electronic device 400 having a slidable housing structure according to an embodiment. Specifically, FIGS 4A and 4B are diagrams illustrating the front and back surfaces of the electronic device 400 in a slide-in state. FIGS. 4C and FIG. 4D are diagram illustrating the front and back surfaces of the electronic device 400 in a slide-out state.

Referring to FIGS. 4A to 4D, the electronic device 400 (e.g., the electronic device 101 in FIG. 1) may include a first housing (or housing) 410, a second housing (or slider) 420 coupled to be slidable from the first housing 410 in a specified direction (e.g., the direction ① or direction ② (e.g., ± y-axis direction), and a rollable display 430 (e.g., a flexible display, an expandable display, or a stretchable display) disposed to be supported by at least a portion of the first housing 410 and the second housing 420. According to an embodiment, the electronic device 400 may be configured such that the second housing 420 slides out in a first direction (direction ①) or slides in along a second direction (direction ②) opposite the first direction (direction ①) relative to the first housing 410 held by the user. According to an embodiment, at least a portion of the second housing 420 including a second space 4201 may be received inside a first space 4101 of the first housing 410, thereby switching to the slide-in state. According to an embodiment, the electronic device 400 may include a support member (e.g., a bendable member, a multi-joint hinge module, or a multi-bar assembly) that forms at least partially the same plane as at least a portion of the second housing 420 in the slide-out state and is at least partially received inside the first space 4101 of the first housing 410 in the slide-in state. According to an embodiment, at least a portion of the rollable display 430, in the slide-in state, may be received inside the first space 4101 of the first housing 410 to be bent while being supported by the support member, thereby being disposed so as to be invisible from the outside. According to an embodiment, at least a portion of the rollable display 430, in the slide-out state, may be disposed so as to be visible from the outside while being supported by the support member that forms at least partially the same plane as the second housing 420.

The first housing 410 may include a first side member 411. According to an embodiment, the first side member 411 may include a first side surface 4111 having a first length along a first direction (e.g., the y-axis direction), a second side surface 4112 extending from the first side surface 4111 along a direction (e.g., the x-axis direction) substantially perpendicular to the first side surface 4111 to have a second length shorter than the first length, and a third side surface 4113 extending from the second side surface 4112 substantially parallel to the first side surface 4111 to have the first length. According to an embodiment, the first housing 410 may include a first extension member 412 extending from at least a portion of the first side member 411 to at least a portion of the first space 4101. According to an embodiment, the first extension member 412 may be formed integrally with the first side member 411. In a certain embodiment, the first extension member 412 may be formed separately from the first side member 411 and may be structurally coupled to the first side member 411.

The second housing 420 may include a second side member 421. The second side member 421 may include a fourth side surface 4211 that corresponds at least partially to the first side surface 4111 and has a third length, a fifth side surface 4212 that extends from the fourth side surface 4211 in a direction substantially parallel to the second side surface 4112 and has a fourth length shorter than the third length, and a sixth side surface 4213 that extends from the fifth side surface 4212 to correspond to the third side surface 4113 and has the third length. According to an embodiment, at least a portion of the second side member 421 may include a second extension member 422 that extends to at least a portion of the second space 4201 of the second housing 420. According to an embodiment, the second extension member 422 may be formed integrally with the second side member 421. In a certain embodiment, the second extension member 422 may be formed separately from the second side member 421 and structurally coupled to the second side member 421.

According to an embodiment, the first side surface 4111 and the fourth side surface 4211 may be coupled to slidable relative to each other. The third side surface 4113 and the sixth side surface 4213 may be coupled to slidable relative to each other. According to an embodiment, in the slide-in state, the fourth side surface 4211 may be disposed to overlap the first side surface 4111 so as to be substantially invisible from the outside. In the slide-in state, the sixth side surface 4213 may be disposed to overlap the third side surface 4113 so as to be substantially invisible from the outside. In a certain embodiment, at least a portion of the fourth side surface 4211 and the sixth side surface 4213 may be disposed to be at least partially visible from the outside in the slide-in state. According to an embodiment, in the slide-in state, the second extension member 422 may be disposed to overlap the first extension member 412 so as to be substantially invisible from the outside.

The first housing 410 may include a first rear cover 413 coupled to at least a portion of the first side member 411. According to an embodiment, the first rear cover 413 may be disposed to be coupled to at least a portion of the first extension member 412. In a certain embodiment, the first rear cover 413 may be formed integrally with the first side member 411. In a certain embodiment, the first rear cover 413 may extend to at least a portion of the first side member 411. In a certain embodiment, at least a portion of the first extension member 412 may be replaced by the first rear cover 413.

The second housing 420 may include a second rear cover 423 coupled to at least a portion of the second side member 421. According to an embodiment, the second rear cover 423 may be disposed to be coupled to at least a portion of the second extension member 422. In a certain embodiment, the second rear cover 423 may be formed integrally with the second side member 421. In a certain embodiment, the second rear cover 423 may extend to at least a portion of the second side member 421. In a certain embodiment, at least a portion of the second extension member 422 may be replaced by the second rear cover 423.

According to an embodiment, the rollable display 430 may include a first portion 430a (e.g., a flat portion) that is always visible from the outside and a second portion 430b (e.g., a bendable portion) that extends from the first portion 430a and is at least partially received inside the first space 4101 of the first housing 410 so as not to be visible from the outside in the slide-in state. According to an embodiment, the first portion 430a may be disposed to be supported by the second housing 420, and the second portion 430b may be disposed to be supported at least partially by the support member. According to an embodiment, when the second housing 420 slides out along the first direction (direction ①), the second portion 430b of the rollable display 430 may be disposed to form substantially the same plane as the first portion 430a and may be visible from the outside. According to an embodiment, when the second housing 420 slides in along the second direction (direction ②), the second portion 430b of the rollable display 430 may be received inside the first space 4101 of the first housing 410 so as to be bent such that it is not visible from the outside. Therefore, the electronic device 400 may be configured such that the display area, which is exposed to the outside on the rollable display 430 and displays visual information, may vary as the second housing 420 slides from the first housing 410 along a specified direction (e.g., the ±y-axis direction).

According to an embodiment, the rollable display 430 may vary in length in the first direction (direction ①) according to the sliding movement of the second housing 420. For example, the rollable display 430 may have a first display area (e.g., the first portion 430a) corresponding to a first length L1 in a slide-in state. According to an embodiment, as the second housing 420 slides by a second length L2 from the first housing 410 in the slide-out state, the rollable display 430 may be expanded to have a third display area corresponding to a third length L3 greater than the first length L1 and including the first display area and the second display area (e.g., the second portion 430b).

The electronic device 400 may include at least one of an input device (e.g., a microphone 403-1), an audio output device (e.g., a call receiver 406 and/or a speaker 407), sensor modules 404 and 417, a camera module (e.g., a first camera module 405 or a second camera module 416), a connector port 408, a key input device 419, or an indicator (not shown) disposed in the second space 4201 of the second housing 420. According to an embodiment, the electronic device 400 may include another input device (e.g., a microphone 403) disposed in the first housing 410. According to an embodiment, the electronic device 400 may be configured to exclude at least one of the above-described components or further include other components. According to an embodiment, at least one of the above-described components may also be disposed in the first space 4101 of the first housing 410.

The input device may include a microphone 403-1. In a certain embodiment, the input device (e.g., the microphone 403-1) may include a plurality of microphones arranged to detect the direction of sound. The sound output device may include, for example, a call receiver 406 and a speaker 407. According to an embodiment, sound may be output from the speaker 407 to the outside through at least one speaker hole formed at a position (e.g., the fifth side surface 4212) that is always exposed to the outside, regardless of the slide state. According to an embodiment, the connector port 408 may be exposed to the outside through a connector port hole formed in the second housing 420 in the slide-out state. In a certain embodiment, the connector port 408 may be exposed to the outside through an opening formed in the first housing 410 to correspond to the connector port hole in the slide-in state. In a certain embodiment, the call receiver 406 may include a speaker (e.g., a piezo speaker) that operates without a separate speaker hole.

The sensor modules 404 and 417 may generate electric signals or data values corresponding to internal operating states of the electronic device 400 or external environmental states. The sensor modules 404 and 417 may include, for example, a first sensor module 404 (e.g., a proximity sensor or an illuminance sensor) disposed on the front surface of the electronic device 400 and/or a second sensor module 417 (e.g., a heart rate monitoring (HRM) sensor) disposed on the rear surface of the electronic device 400. According to an embodiment, the first sensor module 404 may be disposed under the rollable display 430 when viewed from the front of the electronic device 400. According to an embodiment, the first sensor module 404 and/or the second sensor module 417 may include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

The camera module may include a first camera module 405 disposed on the front surface of the electronic device 400 and a second camera module 416 disposed on the rear surface of the electronic device 400. According to an embodiment, the electronic device 400 may also include a flash (not shown) positioned near the second camera module 416. According to an embodiment, the camera modules 405 and 416 may include one or more lenses, an image sensor and/or an image signal processor. According to an embodiment, the first camera module 405 may be disposed under the rollable display 430 when viewed from the front of the electronic device 400 and configured to capture a subject through a portion of an active area of the rollable display 430.

According to an embodiment, the first camera module 405 and/or the first sensor module 404 may be disposed in communication with an external environment through a transmitting area or a perforated opening formed in the rollable display 430 in the second space 4201 of the second housing 420. According to an embodiment, an area of the rollable display 430 facing the first camera module 405 may be formed as a transmitting area having a specified transmittance as a portion of the display area for displaying content. According to an embodiment, the transmitting area may be formed to have a transmittance in a range of about 5% to about 20%. For example, the transmitting area of the rollable display 430 may include an area with a lower pixel arrangement density and/or wire density than the surrounding area. For example, the transmitting area may replace the opening described above. The first camera module 405 may include a camera, also called an under-display camera (UDC), which is positioned under the display 430 and receives light through the transmitting area of the display 430. In a certain embodiment, the first sensor module 404 may be disposed in the internal space of the electronic device 400 to perform its function without being visually exposed through the rollable display 430.

The electronic device 400 may include at least one antenna element electrically connected to a wireless communication circuit (e.g., the wireless communication module 192 in FIG. 1) disposed in the second housing 420. According to an embodiment, the electronic device 400 may include a bezel antenna A disposed through the conductive first side member 411 of the first housing 410. For example, the bezel antenna A may include a conductive portion 427 disposed on at least a portion of the second side surface 4112 and the third side surface 4113 of the first side member 411 and electrically split through one or more segmenting portions 4271 and 4272 formed of a non-conductive material (e.g., polymer). According to an embodiment, the electronic device 400 may include a side cover 4112a disposed on the second side surface 4112 to cover at least a portion of the at least one segmenting portion 4271. In a certain embodiment, the bezel antenna A may be disposed on at least one of the first side surface 4111, the second side surface 4112, and the third side surface 4113. In a certain embodiment, the bezel antenna A may be disposed on at least one of the fourth side surface 4211, the fifth side surface 4212, and the sixth side surface 4213 of the second housing 420.

According to an embodiment, switching from the slide-in state to the slide-out state or from the slide-out state to the slide-in state may be performed automatically. For example, the switching of state may be performed through gear engagement between a slide motor including a pinion gear disposed in the first space 4101 of the first housing 410 and a rack gear disposed in the second space 4201 of the second housing 420 and engaged with the pinion gear. For example, a processor (e.g., the processor 120 in FIG. 1) of the electronic device 400 may drive a slide motor disposed inside the electronic device 400 when detecting a triggering operation for switching the state. According to an embodiment, the triggering operation may include selecting (e.g., touching) an object displayed on the rollable display 430 or manipulating a physical button (e.g., a key button) included in the electronic device 400.

The display mode of the electronic device may be determined as a vertical mode (or portrait mode) or a horizontal mode (or landscape mode), based on the posture of the electronic device. For example, in FIG. 1, the sensor module 176 may include a sensor (e.g., an acceleration sensor or a gyro sensor) that identifies the relative positions of sides in the housing structure of the electronic device 101 and generates data used to identify the movement and direction of the electronic device 101. The processor 120 may recognize the posture of the electronic device, based on the data received from the sensor, and determine the display mode as a landscape mode or a portrait mode, based on the recognized posture. The processor 120 may display visual information on the display, based on the determined display mode.

The processor 120 may classify the display area of the display into one or more areas, based on the state of the electronic device. The size (area) of the screen (e.g., an application execution screen or a background image) to be displayed in the display area does not change depending on the state change, and the width and height of the screen may be reversed depending on the posture change. For example, if the size of the screen in the portrait mode is M (width) * N (height), the size of the screen may be N (width) * M (height) in the landscape mode.

According to an embodiment, in an electronic device having a foldable housing structure of an out-folding type, if the electronic device is recognized as being in the folded state, the processor 120 may divide the display area into two display areas facing opposite directions. In an electronic device having a foldable housing structure of an out-folding type, if it is recognized that the electronic device is in the partially folded state and that the angle between the first housing and the second housing falls within a specified first angle range (e.g., between about 90 degrees and 120 degrees), the processor 120 may divide the display area into two display areas. In an electronic device having a foldable housing structure of an out-folding type, if it is recognized that the electronic device is in the unfolded state or in the partially folded state with the angle between the first housing and the second housing falling within a specified second angle range (e.g., between about 120 degrees and 179 degrees), the processor 120 may determine the display area as one without dividing the same.

According to an embodiment, in an electronic device having a foldable housing structure of an in-folding type, if it is recognized that the electronic device is in the partially folded state and that the angle between the first housing and the second housing falls within a specified first angle range (e.g., between about 90 degrees and 120 degrees), the processor 120 may divide the display area into two display areas. For example, if the electronic device is recognized as being in the state shown in FIG. 3E, the processor 120 may control the display to display a background image in one of the first display area 311 and the second display area 312 and display an application execution screen in the other. In an electronic device having a foldable housing structure of an in-folding type, if it is recognized that the electronic device is in the unfolded state or in the partially folded state with the angle between the first housing and the second housing falling within a specified second angle range (e.g., between about 120 degrees and 179 degrees), the processor 120 may determine the display area as one without dividing the same. The processor 120 may display a background image in an area identified as a blank area in the first display area. The processor 120 may display a background image in an area identified as a blank area in the second display area. If the display area is determined as one without dividing the same, the processor 120 may display a background image in an area identified as a blank area among the entire display area.

According to an embodiment, in an electronic device having a bar-type housing structure, the processor 120 may determine the display area as one without dividing the same. The processor 120 may display a background image in an area identified as a blank area among the entire display area.

According to an embodiment, in an electronic device having a slidable housing structure, the processor 120 may determine the display area as one without dividing the same. The processor 120 may display a background image in an area identified as a blank area among the display areas exposed to the outside.

Based on the application being executed by the processor 120, the corresponding execution screen may be displayed on a portion of the display. The processor 120 may configure at least a portion of a blank area, excluding the area (hereinafter, an application display area) where the application execution screen is displayed, which is not covered by the application execution screen, among the entire display area of the display, as a display area for displaying a background image (hereinafter, a background image display area). The position and/or size of the application execution screen may vary on the display, for example, depending on a user input (e.g., a touch gesture), and thus, reconfiguration of the background image display area may be required. In this document, reconfiguration of the background image display area may be defined as changing the position of the background image display area and/or adjusting (reducing or increasing) the size thereof on the display.

The electronic device, based at least on the occurrence of a trigger event that causes reconfiguration of the background image display area, may reconfigure the background image display area and display the background image in the reconfigured background image display area.

According to an embodiment, in an electronic device having a bar-type housing structure, the trigger event may include a change in display mode (e.g., a change in display mode from the horizonal mode to the vertical mode or vice versa) that is found as a result of monitoring the posture of the electronic device. The trigger event may include a visual change in an application execution screen (e.g., an application execution screen is called to a home screen, display of an application execution screen is terminated, or the position of an application execution screen is changed on the home screen) recognized as a result of monitoring the state of the application.

According to an embodiment, in an electronic device having a foldable housing structure or a slidable housing structure, the trigger event may include a change in display mode. The trigger event may include a visual change in the application execution screen. The trigger event may include a state change recognized as a result of monitoring the state of the electronic device.

As the background image display area is reconfigured, reconstruction (in other words, editing or modification) of the background image may be required. For example, reconstruction may be reducing the size of the background image (e.g., a tile-type image) while increasing the number of images to fill in the background image display area. According to an embodiment, reconstruction may be processing an image such that a primary object of the background image (e.g., an object closest to the center of the image or an object with the largest size among objects exist in the background image, which are recognized as a result of image recognition for the background image) is positioned at the center of the background image display area. According to an embodiment, reconstruction may be reducing the size of the background image (e.g., a landscape image) while maintaining an aspect ratio thereof. The processor 120 may display the reconstructed background image in the background image display area.

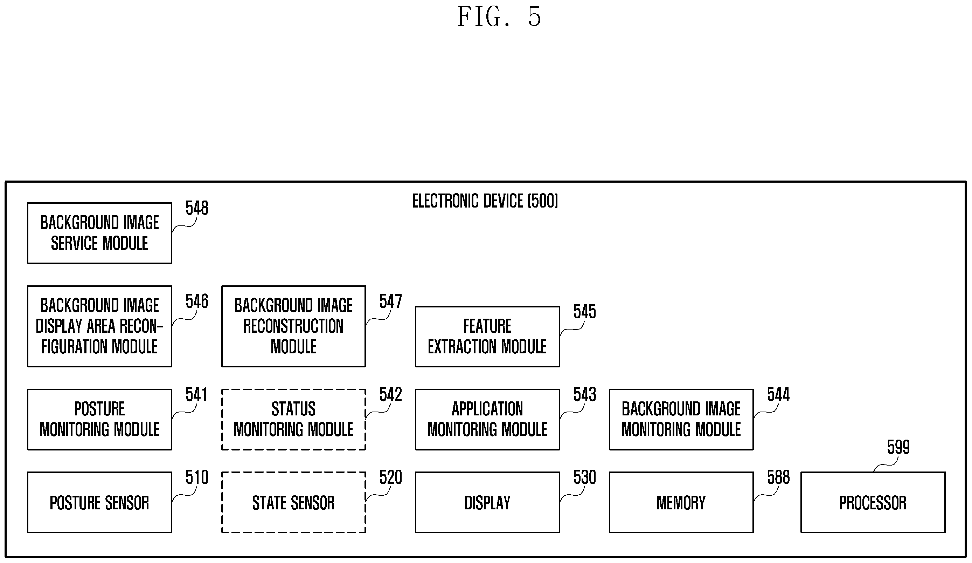

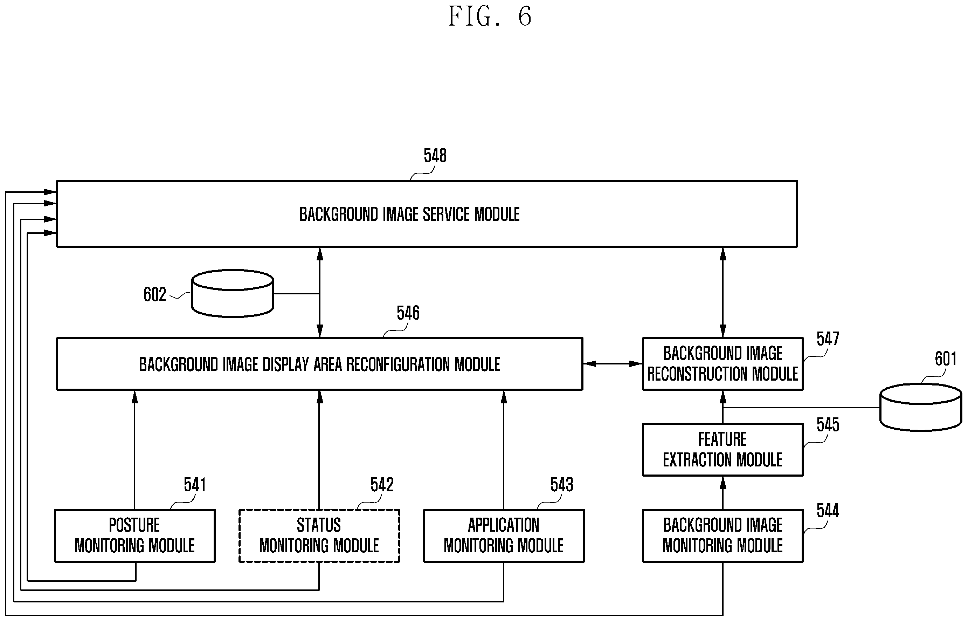

FIG. 5 is a block diagram of an electronic device 500 according to an embodiment. FIG. 6 is a diagram illustrating connections between modules 541 to 548 configured in an electronic device 500.

Referring to FIGS. 5 and 6, the electronic device 500 may include a posture sensor 510, a state sensor 520, a display 530, a posture monitoring module 541, a status monitoring module 542, an application monitoring module 543, a background image monitoring module 544, a feature extraction module 545, a background image display area reconfiguration module (hereinafter, simply referred to as a reconfiguration module) 546, a background image reconstruction module (hereinafter, simply referred to as a reconstruction module) 547, a background image service module 548, a memory 588, and a processor 599. The above components of the electronic device 500 may be operatively or electrically connected to each other. The modules 541 to 548 may be implemented in software. For example, the background image service module 548 may be an application (e.g., the application 146 in FIG. 1). The remaining modules 541 to 547 may be included in middleware (e.g., the middleware 144 in FIG. 1). The modules 541 to 548 may be stored as instructions in a nonvolatile memory (e.g., the nonvolatile memory 134 in FIG. 1) and loaded into a volatile memory (e.g., the volatile memory 132 in FIG. 1) and then executed by the processor 599 (e.g., the processor 120 in FIG. 1). At least one of the modules 541 to 548 may be executed by a processor (e.g., the auxiliary processor 123) specialized in the background image service. If the electronic device 500 is implemented to have a bar-type housing structure, the state sensor 520 and the status monitoring module 542 may be omitted from the electronic device 500.

The posture sensor 510 may be configured to include a gyro sensor and/or an acceleration sensor, and may identify the relative positions of the sides in the housing structure of the electronic device 500 and generate data used to identify the movement and direction of the electronic device 500. The processor 120, based on data received from the posture sensor 510, may recognize a posture of the electronic device 500 and determine the display mode to be a horizontal mode or a vertical mode, based on the recognized posture. The processor 120 may display visual information on the display, based on the determined display mode. For example, the direction in which a first axis (e.g., the x-axis in FIG. 2) of the posture sensor 510 faces may be configured to be the same as the direction in which a first side of the housing structure of the electronic device 500 extends. The direction in which a second axis (e.g., the y-axis in FIG. 2) of the posture sensor 510, which is perpendicular to the first axis, faces may be configured to be the same as the direction in which a second side of the housing structure, which is perpendicular to the first side and is relatively long, extends. If the first axis direction of the posture sensor 510 is recognized as being the same as or opposite to the gravity direction, the processor 120 may determine the display mode to be a horizontal mode and
configure visual information corresponding to the horizontal mode. If the second axis direction of the posture sensor 510 is recognized as being the same as or opposite to the gravity direction, the processor 120 may determine the display mode to be a vertical mode and configure visual information corresponding to the vertical mode.

The state sensor 520 may generate data used to recognize the state of the electronic device 500. In an embodiment, if the electronic device 500 has a foldable housing structure, the state sensor 520 may include a sensor (e.g., an encoder or Hall sensor) that is attached to a hinge assembly (e.g., the hinge assembly 340 in FIG. 3) and generates and outputs data corresponding to an angle. According to an embodiment, the state sensor 520 may include a motion sensor (e.g., an acceleration sensor and/or a gyro sensor) that is disposed in the internal space of the housing of the electronic device 500. For example, the state sensor 520 may include a first motion sensor that is disposed in the first housing (e.g., the first housing 310 in FIG. 3) and generates data corresponding to the posture (position) and/or movement (e.g., angular velocity and/or acceleration) of the first housing, and a second motion sensor that is disposed in the second housing (e.g., the second housing 320 in FIG. 3) and generates data corresponding to the posture and/or movement of the second housing. The state sensor 520 may be configured as a combination of a Hall sensor and an acceleration sensor. In a certain embodiment, one of the two motion sensors may be used as the posture sensor 510. The processor 599 may recognize the state of the electronic device 500 using data received from the state sensor 520. For example, the processor 599 may calculate the angle formed between the first housing 310 and the second housing 320 using the data received from the state sensor 520 and, based on the data obtained as the calculation result, recognize the state of the electronic device 500.

In an embodiment, if the electronic device 500 has a slidable housing structure, the state sensor 520 may include a sensor (e.g., an encoder or Hall sensor) that is attached to a gear (e.g., a pinion gear) that moves a slider (e.g., the second housing 420 referring to FIG. 4C) and, when the gear is rotated by force transmitted from a slide motor or force transmitted from a user through the slider, generates and outputs data corresponding to the rotation angle. According to an embodiment, the state sensor 520 may include a sensor (e.g., a pressure sensor) that is disposed on the bendable portion of the display 530 and generates data corresponding to the curvature of the portion. The processor 599, based on the data received from the state sensor 520, may recognize the state of the electronic device 500 as a slide-in state or a slide-out state.

The posture monitoring module 541 may monitor the posture of the electronic device 500 using the data generated by the posture sensor 510 and provide a monitoring result (posture change) to the reconfiguration module 546 and the background image service module 548. For example, the posture monitoring module 541 may provide the reconfiguration module 546 and the background image service module 548 with, as a monitoring result, a posture change event indicating a change from a first posture corresponding to the horizontal mode to a second posture corresponding to the vertical mode, or vice versa.

The status monitoring module 542 may monitor the state of the electronic device 500 using the data generated by the state sensor 520 and provide a monitoring result to the reconfiguration module 546 and the background image service module 548. According to an embodiment, the status monitoring module 542 may provide the reconfiguration module 546 and the background image service module 548 with, as a monitoring result, a state change event indicating a change from the folded state to the intermediate state, a change from the intermediate state to the unfolded state, or vice versa. The status monitoring module 542 may provide, along with the event, information indicating an angle between two housings in the foldable housing structure to the reconfiguration module 546 and the background image service module 548. According to an embodiment, the status monitoring module 542 may provide the reconfiguration module 546 and the background image service module 548 with a state change event indicating a change from the slide-in state to the slide-out state or vice versa.

The application monitoring module 543 may monitor the state of an application stored in the memory 588 and provide a monitoring result to the reconfiguration module 546 and the background image service module 548. Here, the monitoring target may include applications that may provide visual information to the user or provide an execution screen (user interface screen) for interaction with the user. The monitoring target may include a preloaded application or a third party application capable of being downloaded from the server 108. The application monitoring module 543 may provide the reconfiguration module 546 and the background image service module 548 with, as a monitoring result, an application change event, such as an event that calls the application execution screen to a home screen, an event that ends the display of the application execution screen, or an event that changes the position of the application display area on the home screen. The application monitoring module 543 may provide, along with the event, identification information (e.g., a process ID) of the corresponding application to the reconfiguration module 546 and the background image service module 548. The application monitoring module 543 may provide, along with the event, position information (e.g., coordinates of the upper left corner, and width and height of the display area) for the application display area where the application execution screen is to be displayed to the reconfiguration module 546 and the background image service module 548.

The background image monitoring module 544 may monitor whether a background image change event occurs to display a second background image replacing the first background image being displayed on the display. If a background image change event occurs, the background image monitoring module 544 may notify the feature extraction module 545 and the background image service module 548 of the occurrence of the background image change event. If the background image change event is generated by the background image service module 548, the background image monitoring module 544 may ignore the occurrence of the background image change event without notifying the feature extraction module 545 and the background image service module 548. For example, the fact that the first background image and the second background image are stored in the folder may indicate that the background image change event was generated by the background image service module 548. Therefore, if the first background image and the second background image are stored in the same folder, the background image monitoring module 544 may not react to the occurrence of the background image change event. If the background image change event is generated by another module (e.g., an operating system), the background image monitoring module 544 may react to the occurrence of the background image change event and notify the feature extraction module 545 and the background image service module 548 of the background image change event. The background image monitoring module 544 may provide information about the first background image and information about the second background image to the feature extraction module 545 and the background image service module 548. For example, the background image information provided to the feature extraction module 545 and the background image service module 548 may include a file name, a folder name, a folder path, or unique identification information (e.g., a hash value) of the corresponding image.

In response to a background image change event being received from the background image monitoring module 544, the feature extraction module 545 may extract information representing the features of the corresponding image from the background image (e.g., the second background image) and store the extracted feature information in a first memory area 601 allocated for feature information storage in the memory 588. If it is necessary to reconstruct the background image, the background image reconstruction module 547 may identify the corresponding feature information from the first memory area 601. The feature information extracted by the feature extraction module 545 may include information about the type (e.g., tile, landscape, or portrait) of the corresponding image, identification information for identifying s primary object from the objects existing in the image, position information indicating the position of the primary object in the corresponding image (e.g., coordinates of the upper left corner of the corresponding primary object, and width and height of the primary object), or information on whether arbitrary reconstruction of the corresponding image is permitted. Whether the reconstruction is permitted is determined by the business operator who provides or produces the corresponding image, and may be defined in the metadata of the corresponding image. The above-described feature information may be extracted from the metadata of the corresponding image file. The identification information may be extracted using an artificial intelligence model. For example, the artificial intelligence model may be machine-learned to output feature information as a result value of a given input value (image). The feature extraction module 545 may input the background image as an input value to the artificial intelligence model. The feature extraction module 545 may obtain feature information from the result value output from the artificial intelligence model.

The reconfiguration module 546 may reconfigure the background image display area, based on the monitoring results provided from the monitoring modules 541, 542, and 543, and store the size and position information about the reconfigured background image display area in the second memory area 602 allocated for storing the position information of the background image display area in the memory 588. If it is necessary to reconstruct the screen of the electronic device 500, the background image service module 548 may identify the corresponding position information from the second memory area 602.

According to an embodiment, the reconfiguration module 546 may receive, from the application monitoring module 543, an event to call the application execution screen to the home screen while the background image is being displayed through the entire display area of the display 530 configured as the background image display area. The reconfiguration module 546 may reduce the background image display area so as not to overlap the application execution screen called to the home screen. The reconfiguration module 546 may provide position information of the reduced background image display area to the background image service module 548.

According to an embodiment, the reconfiguration module 546 may receive, from the application monitoring module 543, an event to terminate the display of the application execution screen while the background image and the application execution screen are being displayed so as not to overlap each other. In response to the termination of the display of the application execution screen, the reconfiguration module 546 may enlarge the background image display area, for example, to the entire display area. The reconfiguration module 546 may provide position information of the enlarged background image display area to the background image service module 548.

According to an embodiment, the reconfiguration module 546 may receive, from the application monitoring module 543, an event to change the position of the application display area while the background image and the application execution screen are being displayed so as not to overlap each other. The application execution screen may be displayed in the application display area whose position was changed. In response to the change in the position of the application execution screen, the reconfiguration module 546 may reconfigure the background image display area (e.g., reduce the size or change the position to be displayed) so that it does not overlap the application execution screen. The reconfiguration module 546 may provide position information of the reconfigured background image display area to the background image service module 548.

According to an embodiment, the reconfiguration module 546 may receive, from the posture monitoring module 541, an event indicating a change from a first posture corresponding to the horizontal mode to a second posture corresponding to the vertical mode, or vice versa while the background image and the application execution screen are being displayed so as not to overlap each other. In response to the change in the posture, the reconfiguration module 546 may reconfigure the background image display area (e.g., reduce the size or change the position to be displayed) so that it does not overlap the application execution screen. The reconfiguration module 546 may provide position information of the reconfigured background image display area to the background image service module 548.

According to an embodiment, the reconfiguration module 546 may receive an event indicating a state change from the status monitoring module 542 while the background image and the application execution screen are being displayed so as not to overlap each other. In response to the state change, the reconfiguration module 546 may reconfigure the background image display area (e.g., reduce the size or change the position to be displayed) so that it does not overlap the application execution screen. The reconfiguration module 546 may provide position information of the reconfigured background image display area to the background image service module 548.

The reconstruction module 547 may reconstruct a background image to be displayed in the background image display area reconfigured by the reconfiguration module 546, based on the feature information received from the feature extraction module 545. The reconstruction module 547 may provide the reconstructed background image to the background image service module 548.

According to an embodiment, the reconstruction module 547 may reconstruct the background image (e.g., a tile-type image) by reducing the size of the background image while increasing the number of background images so as to fill in the background image display area.

According to an embodiment, the reconstruction module 547 may reconstruct the background image by processing the image so that a primary object of the background image (e.g., an object closest to the center of the image or an object with the largest size among objects exist in the background image, which are recognized as a result of image recognition for the background image) is positioned at the center of the background image display area.

According to an embodiment, the reconstruction module 547 may reconstruct the background image by reducing the size of the background image (e.g., a landscape image) to fit the background image display area while maintaining the aspect ratio thereof.

The background image service module 548 may display the background image reconstructed by the reconstruction module 547 in the background image display area reconfigured by the reconfiguration module 546.

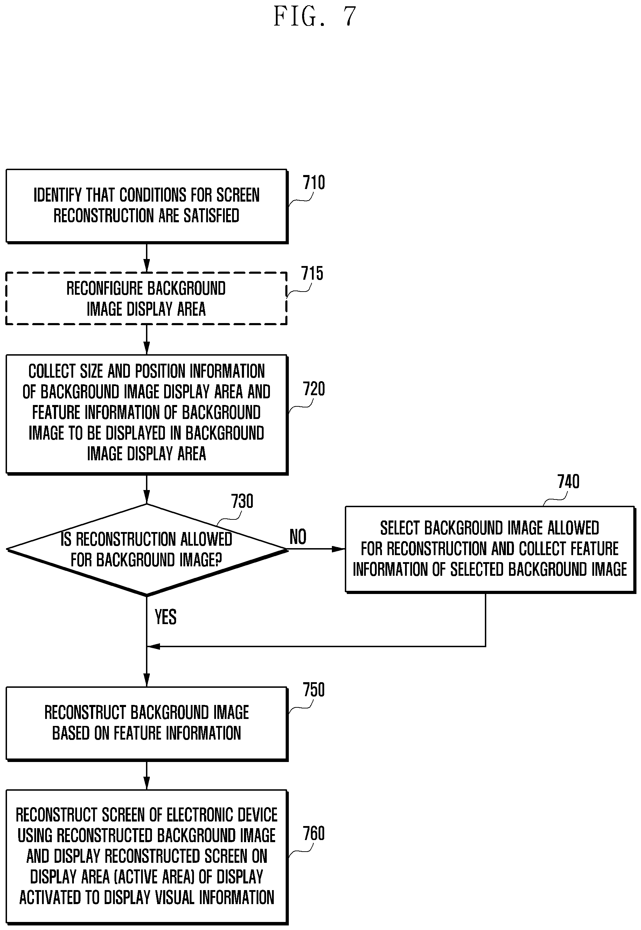

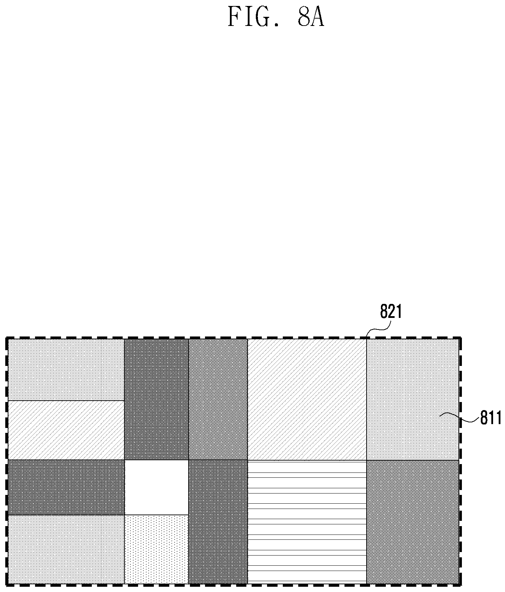

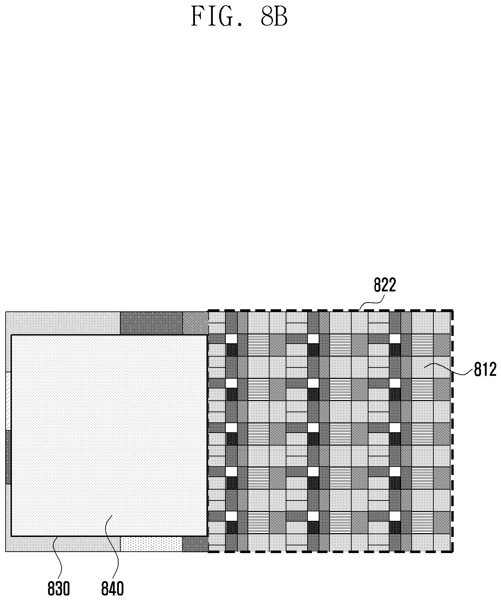

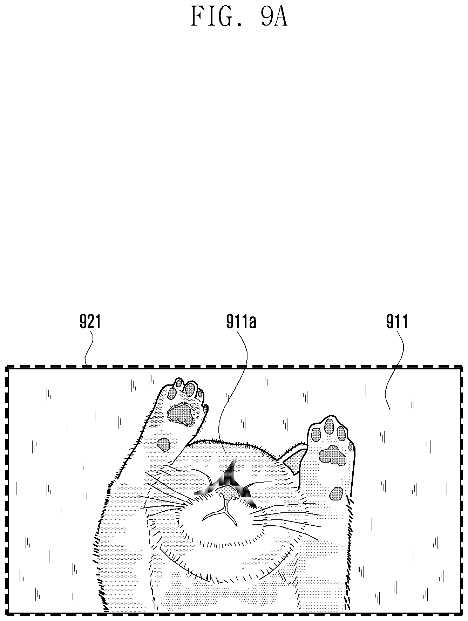

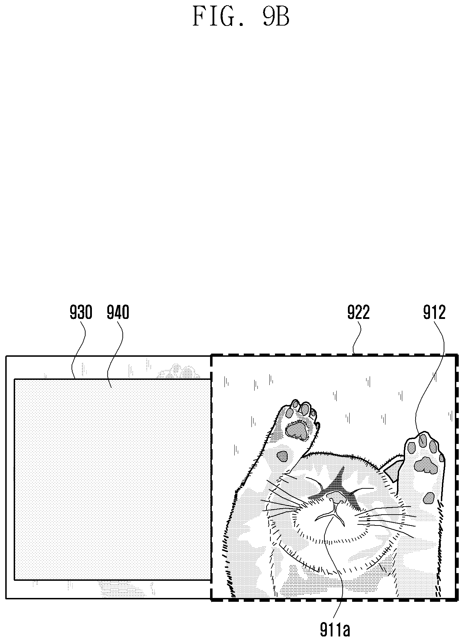

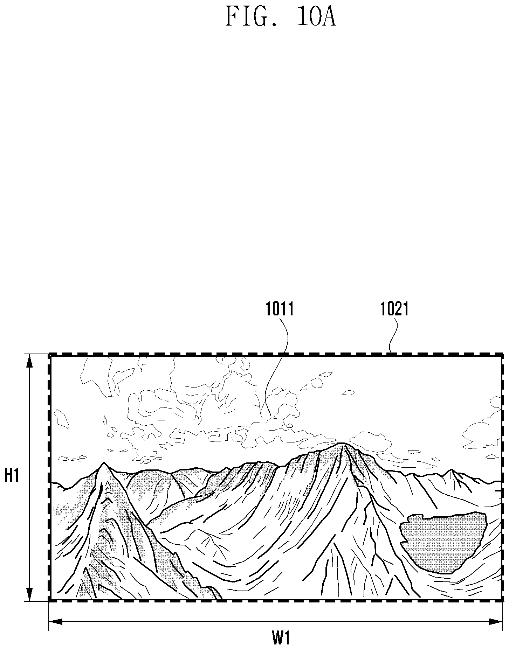

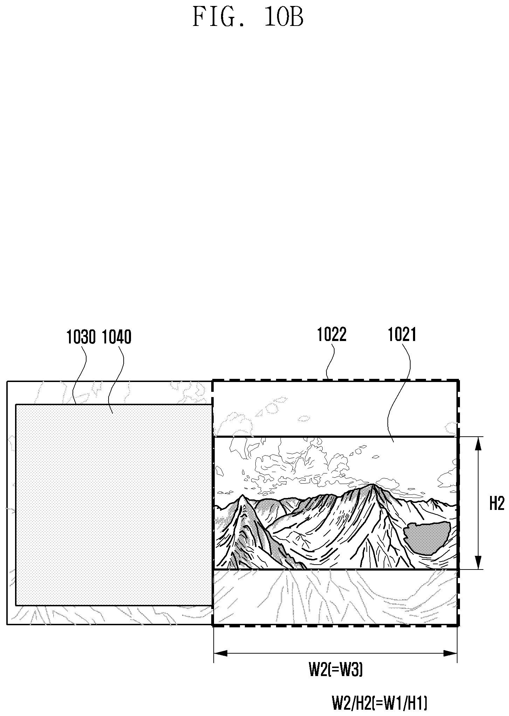

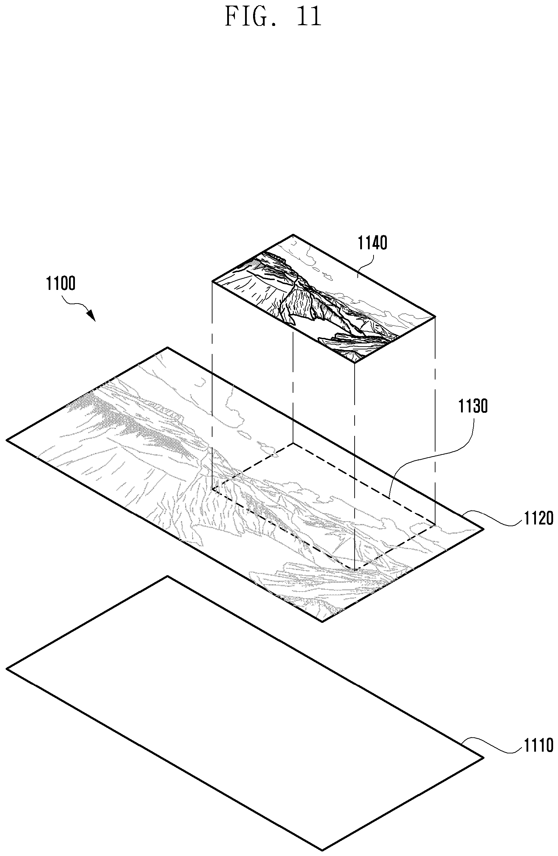

FIG. 7 is a flowchart illustrating operations for providing a background image service to a user according to an embodiment. The processor 599 may perform the operations in FIG. 7 by executing the modules 541 to 548 described above. FIGS. 8A and 8B are diagrams illustrating an operation for reconstructing a tile-type background image. FIGS. 9A and 9B are diagrams illustrating an operation for reconstructing an object-type background image. FIG. 10A and FIG. 10B are diagrams illustrating operations for reconstructing a landscape-type background image. FIG. 11 is a diagram illustrating a screen layer structure according to an embodiment.

In operation 710, the processor 599 may identify that conditions for reconstructing a screen of the electronic device 500 being displayed on the display 530 are satisfied. The reason for identifying whether the screen reconstruction conditions are satisfied is that, if screen reconstruction (e.g., background image display area reconfiguration and/or background image reconstruction) is frequently performed, the performance of the electronic device 500 may be degraded and unnecessary power consumption may be caused.

According to an embodiment, if an additional posture change event does not occur for a specified time (e.g., several seconds) from the time at which a posture change event occurs by the posture monitoring module 541, the screen reconstruction conditions may be considered to be satisfied.

According to an embodiment, if an additional state change event does not occur for a specified time from the time at which a state change event occurs by the status monitoring module 542, the screen reconstruction conditions may be considered to be satisfied.

According to an embodiment, if an display end event (or call event) does not occur for a specified time from the time at which a call event that calls the application execution screen to the home screen (or a display end event that ends the display of the application execution screen) occurs by the application monitoring module 543, the screen reconstruction conditions may be considered to be satisfied. If the display of the application execution screen is terminated within a specified time after the application execution screen is called to the home screen (or in the opposite case), the screen reconstruction conditions may be considered not to be satisfied.

According to an embodiment, if an additional event (e.g., a call event, a display end event, or a position change event) does not occur for a specified time from the time at which a position change event to change the application execution screen on the home screen occurs by the application monitoring module 543 and if the ratio of the blank area to the active area where visual information is being displayed on the display 530 is greater than or equal to a specified value, the screen reconstruction conditions may be considered to be satisfied. If an additional event does not occur for a specified time from the time at which a position change event occurs and if the ratio of the blank area calculated after the position change event to the entire display area (active area) is greater by a specified value or more than the ratio of the blank area calculated before the position change event to the entire display area, the screen reconstruction conditions may be considered to be satisfied. Here, the display area (activation area) of the display 530 activated to display visual information may be the entire display area of the display 530 in the bar-type electronic device 500, may vary depending on the degree of folding of the foldable housing in foldable-type electronic device 500 (e.g., the entire display area in the unfolded state or one of the first display area and the second display area, divided by the hinge assembly, in the partially folded state), and may be the portion of the display area of the display 530, which is exposed to the outside, in the slidable-type electronic device 500.

According to an embodiment, if an additional background image change event does not occur from the time at which a background image change event occurs by the background image monitoring module 544, the screen reconstruction conditions may be considered to be satisfied.

If the screen reconstruction conditions are satisfied, the processor 599 may reconfigure the background image display area, based on results of monitoring the posture, the state, and the application in operation 715. If there is no change in the posture, state, and application as the monitoring result (e.g., if there is a change only in the background image), the processor 599 may skip operation 715 and perform operation 720.

In operation 720, the processor 599 may collect information indicating the size and position of an area configured as the background image display area in the active area of the display 530 and information indicating the features of a background image to be displayed in the configured background image display area, which are the basis for screen reconstruction.

According to an embodiment, the processor 599 may obtain size and position information of a display area (e.g., at least a portion of the area configured as a blank area) capable of fully displaying the background in the active area of the display 530 through the result of monitoring the application. The processor 599 may store the size and position information of the background image display area obtained through the result of monitoring the application in, for example, the second memory area 602. If the screen reconstruction conditions are satisfied, the processor 599 may obtain (collect) the size and position information of the background image display area from the second memory area 602.

According to an embodiment, the processor 599 may obtain feature information from the background image and store the obtained feature information, together with the corresponding background image and its identification information (e.g., a hash value), in, for example, the first memory area 601. The processor 599, based on the occurrence of an event indicating a change in the application, may obtain feature information of a first background image being displayed on the display 530 from the first memory area 601. According to an embodiment, the processor 599, based on the occurrence of an event that triggers a background image change from the first background image to the second background image, may obtain feature information of the second background image from the first memory area 601. According to an embodiment, the processor 599, based on the occurrence of a posture change event or a state change event, may also obtain feature information of the first background image being displayed on the display 530 from the first memory area 601.

In operation 730, the processor 599 may determine whether reconstruction is allowed for the background image, based on the collected feature information. If it is identified that the collected feature information includes information indicating that reconstruction is allowed, the processor 599 may perform operation 750. If it is identified that the collected feature information includes information indicating that reconstruction is not allowed, the processor 599 may select another background image that is allowed for reconstruction from, for example, the first memory area 601, collect feature information of the selected background image from the first memory area 601, and then perform operation 750.

In operation 750, the processor 599 may reconstruct the background image, based on the feature information collected in operation 720 or operation 740. First, the processor 599 may identify the type of the background image from the feature information. The processor 599 may reconstruct the background image, based on the identified type. The embodiments for background image reconstruction operations based on the type will be described with reference to FIGS. 8 to 10.

Referring to FIGS. 8A and 8B, the processor 599 may display a first background image 811 of a tile type in a first background image display area 821 (e.g., the entire display area of the display 530). As an event that calls an application execution screen to the display 530 occurs, the processor 599 may configure an application display area 830 in the display area of the display 530. The processor 599 may configure a second background image display area 822 that is smaller (reduced in area) than the first background image display area 821 so as not to overlap the application display area 830. The processor 599 may generate the second background image 812 by reducing the size of the first background image 811 but increasing the number of images so that they fill in the second background image display area 822.

Referring back to FIGS. 8A and 8B, if an event to terminate the execution of the application occurs while the application execution screen 840 is being displayed in the application display area 830 and while the second background image 812 is being displayed in the second background image display area 822, the processor 599 may reconfigure the area where the background image is to be displayed into the first background image display area 811 and reconstruct the background image to be displayed in the first background image display area 811 into the first background image 811.

Referring to FIGS. 9A and 9B, the processor 599 may display a first background image 911 of an object type in a first background image display area 921 (e.g., the entire display area of the display 530). If an event that calls an application execution screen to the display 530 occurs, the processor 599 may configure an application display area 930 in the display area of the display 530. The processor 599 may configure a second background image display area 922 that is smaller than the first background image display area 921 so as not to overlap the application display area 930. The processor 599 may process the first background image 911 so that a primary object 911a of the first background image 911 (e.g., an object closest to the center of the image or an object with the largest size among objects exist in the first background image 911, which are recognized as a result of image recognition for the first background image 911) is positioned at the center of the second background image display area 922, thereby generating the second background image 912.

Referring back to FIGS. 9A and 9B, if an event to terminate the execution of the application occurs while the application execution screen 940 is being displayed in the application display area 930 and while the second background image 912 is being displayed in the second background image display area 922, the processor 599 may reconfigure the area where the background image is to be displayed into the first background image display area 911 and reconstruct the background image to be displayed in the first background image display area 911 into the first background image 911.

Referring to FIGS. 10A and 10B, the processor 599 may display a first background image 1011 of a landscape type in a first background image display area 1021 (e.g., the entire display area of the display 530). If an event that calls an application execution screen to the display 530 occurs, the processor 599 may configure an application display area 1030 in the display area of the display 530. The processor 599 may configure a second background image display area 1022 that is smaller than the first background image display area 1021 so as not to overlap the application display area 1030. The processor 599 may reduce the first background image 1011 to conform to the width or height of the second background image display area 1022 while maintaining the aspect ratio thereof, thereby generating a second background image 1012. For example, the width and height of the first background image 1011 may be W1 and H1, respectively. The processor 599 may reduce the width and height from W1 and H1 to W2 and H2 while maintaining the aspect ratio and reduce the width to conform to the width W3 of the second background image display area 1022.

Referring back to FIGS. 10A and 10B, if an event to terminate the execution of the application occurs while the application execution screen 1040 is being displayed in the application display area 1030 and while the second background image 1012 is being displayed in the second background image display area 1022, the processor 599 may reconfigure the area where the background image is to be displayed into the first background image display area 1021 and reconstruct the background image to be displayed in the first background image display area 1021 into the first background image 1011.

In operation 760, the processor 599 may reconstruct the screen using the reconstructed background image and display the reconstructed screen on the activated display area (activation area) of the display 530 to display visual information. Here, the active area where the reconstructed screen is to be displayed may be the entire display area of the display 530 in the bar-type electronic device 500. It may vary depending on the degree of folding of the foldable housing in the foldable-type electronic device 500. For example, if the electronic device 500 is in the unfolded state, the entire display area of the display 530 may be configured as the active area. If the electronic device 500 is in the partially folded state, one of the first display area and the second display area divided by the hinge assembly may be configured as the active area. According to an embodiment, even if the electronic device 500 is in the partially folded state, the entire display area of the display 530 may be configured as the active area. If the electronic device 500 is configured in a slidable type, a portion of the display area of the display 530, which is exposed to the outside, may be configured as the active area. An embodiment of an operation of displaying a reconstructed screen in an active area will be described with reference to FIG. 11.

Referring to FIG. 11, the processor 599 may generate an image in a designated single color (e.g., white) that fills in the entire active area as a first layer image 1110. The processor 599 may generate a second layer image 1120 that fills in the entire active area. The processor 599 may generate the second layer image 1120 with a representative color (e.g., a color having the highest proportion among the colors constituting the background image) from the background image reconstructed in operation 750. Alternatively, the processor 599 may generate the second layer image 1120 by processing the background image reconstructed in operation 750 to appear blurry (so-called, blur processing). The processor 599 may synthesize the layer images 1110, 1120, and 1140 by superimposing the second layer image 1120 on the first layer image 1110 and superimposing the third layer image 1140, which is the background image reconstructed in operation 750, on the area 1130 corresponding to the background image display area in the second layer image 1120, thereby generating a background screen 1100 to be displayed in the active area. The processor 110 may display the background screen 1100 including the reconstructed background image on the active area of the display 530. The processor 110 may display an application execution screen as a foreground screen of the background screen 1100. For example, the processor 110 may display the application execution screen on the second layer image 1120 so as not to overlap the third layer image 1140, which is the background image.

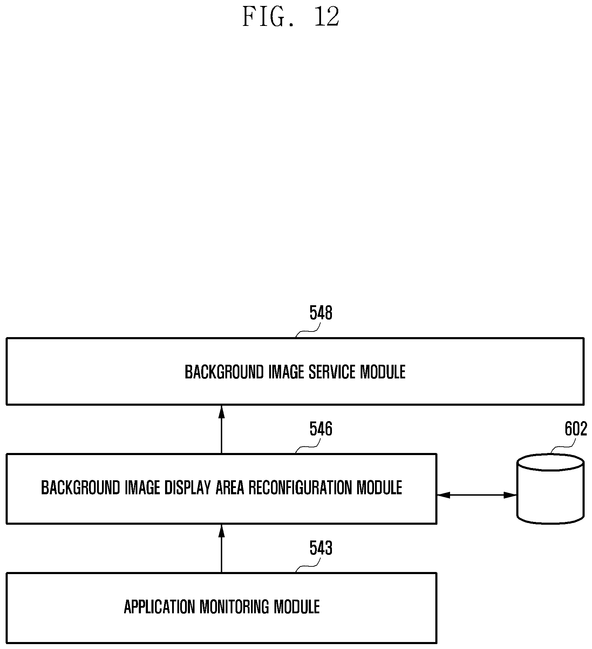

FIG. 12 is a diagram illustrating connections among an application monitoring module 543, a background image display area reconfiguration module 546, and a background image service module 548 according to an embodiment.

The reconfiguration module 546 may receive, from the application monitoring module 543, an application change event such as a call event to call an application execution screen to the active area of the display 530, an end event to terminate the display of the application execution screen in the active area of the display 530, or a position change event to change the position of the application execution screen in the active area, as a monitoring result performed by the application monitoring module 543.

The reconfiguration module 546 may manage the second memory area 602, based on the type of the application change event received from the application monitoring module 543. For example, when receiving a call event, the reconfiguration module 546 may store identification information (e.g., a process ID) of the application corresponding to the called application execution screen in the second memory area 602. In addition, when receiving a call event, the reconfiguration module 546 may configure the background image display area so as not to overlap the called application execution screen and store the size and position information of the configured background image display area in the second memory area 602. When receiving a position change event, the reconfiguration module 546 may reconfigure the background image display area so as not to overlap the application execution screen whose position was changed and update the existing size and position information stored in the second memory area 602 with the size and position information of the reconfigured background image display area. When receiving an end event, the reconfiguration module 546 may delete the identification information of the corresponding application from the second memory area 602. In addition, when receiving an end event, the reconfiguration module 546 may reconfigure the background image display area to the entire active area and update the existing size and position information stored in the second memory area 602 with the size and position information of the reconfigured background image display area.

If the background image service module 548 requests the size and position information of the background image display area for screen reconstruction, the reconfiguration module 546 may obtain the corresponding information from the second memory area 602 and provide it to the background image service module 548.

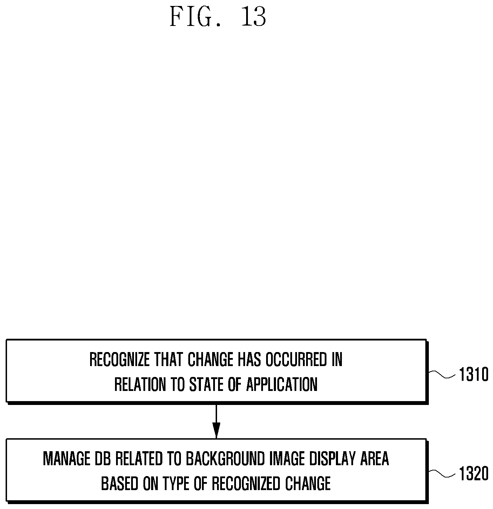

FIG. 13 is a flowchart illustrating operations for managing a database related to a background image display area according to an embodiment. The processor 599 may perform the operations in FIG. 13 by executing the modules 543, 546, and 548 described above. The operations in FIG. 13 may be performed before operation 710 is performed in FIG. 7.

In operation 1310, the processor 599 may recognize that a change has occurred in relation to the state of the application. For example, the processor 599 may recognize that the application execution screen has been called to the display 530, that the display of the application execution screen has ended, or that the position of the application execution screen has changed on the display 530.

In operation 1320, the processor 599 may manage a corresponding database (e.g., the second memory area 602), based on the type of the recognized change (e.g., call, display end, or position change). If the type of change is display end, the processor 599 may delete the identification information of the corresponding application from the database. If the type of change is call, the processor 599 may store the size of the application execution screen, the position information on the display area of the display 530, and the identification information of the corresponding application in the database. If the type of change is position change, the processor 599 may update the existing position information stored in the database with the changed position information on the display area of the display 530.

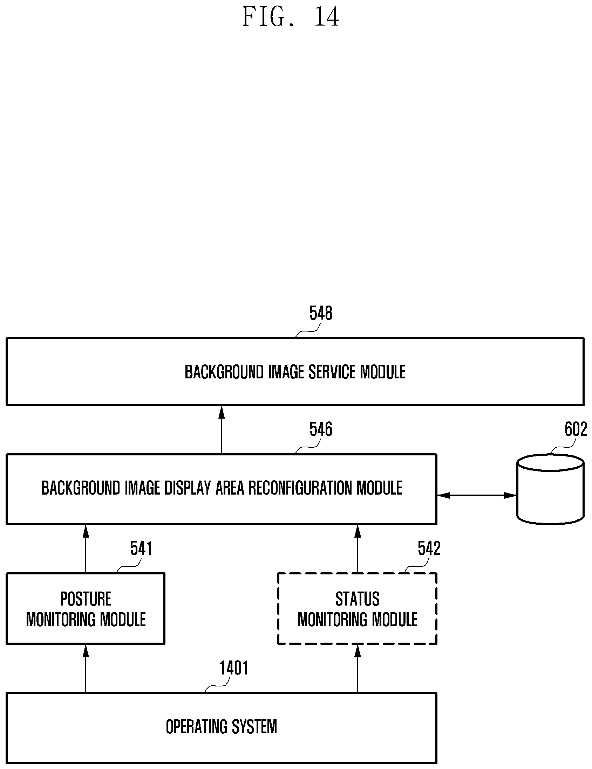

FIG. 14 is a diagram illustrating connections among a posture monitoring module 541, a status monitoring module 542, a background image display area reconfiguration module 546, and a background image service module 548 according to an embodiment.

The reconfiguration module 546 may receive, from the posture monitoring module 541, an event indicating a change from a first posture corresponding to the horizontal mode to a second posture corresponding to the vertical mode or vice versa, as a monitoring result performed by the posture monitoring module 541. Here, the posture change event may be generated by the operating system 1401 and transmitted to the reconfiguration module 546 through the posture monitoring module 541.

The reconfiguration module 546 may receive a state change event from the status monitoring module 542 as a monitoring result performed by the status monitoring module 542. According to an embodiment, the reconfiguration module 546 may receive a state change event indicating a change from a folded state to an intermediate state, from an intermediate state to an unfolded state, or vice versa from the status monitoring module 542. Additionally, the reconfiguration module 546 may receive information indicating an angle between two housings in a foldable housing structure from the status monitoring module 542. According to an embodiment, the reconfiguration module 546 may receive a state change event indicating a change from a slide-in state to a slide-out state or vice versa from the status monitoring module 542. Here, the state change event and the angle information may be generated by the operating system 1401 and transmitted to the reconfiguration module 546 through the status monitoring module 542.

The reconfiguration module 546 may manage the second memory area 602, based on events and information received from the posture monitoring module 541 and the status monitoring module 542. For example, when receiving a state change event, the reconfiguration module 546 may update the existing state information stored in the second memory area 602 with information indicating the state after the change. The reconfiguration module 546 may update the existing angle information stored in the second memory area 602 with angle information received from the status monitoring module 542.

The reconfiguration module 546 may classify the display area of the display 530 into one or more areas, based on the updated state and angle information in the second memory area 602. The reconfiguration module 546 may configure at least a portion identified as a blank area in the display area as a background image display area and store (newly store or update) the configuration information (size and position information) in the second memory area 602.

In an electronic device 500 having a foldable housing structure of an out-folding type, according to an embodiment, if the electronic device 500 is recognized as being in the folded state, the reconfiguration module 546 may divide the display area into two display areas facing opposite directions. If it is recognized that the electronic device 500 is in the partially folded state and that the angle between the first housing and the second housing falls within a specified first angle range (e.g., between about 90 degrees and 120 degrees), the reconfiguration module 546 may divide the display area into two display areas. If it is recognized that the electronic device 500 is in the unfolded state or in the partially folded state with the angle between the first housing and the second housing falling within a specified second angle range (e.g., between about 120 degrees and 179 degrees), the reconfiguration module 546 may determine the display area as one without dividing the same.

In an electronic device 500 having a foldable housing structure of an in-folding type, according to an embodiment, if it is recognized that the electronic device 500 is in the partially folded state and that the angle between the first housing and the second housing falls within a specified first angle range (e.g., between about 90 degrees and 120 degrees), the reconfiguration module 546 may divide the display area into two display areas. For example, if the electronic device 500 is recognized as being in the state shown in FIG. 3E, the reconfiguration module 546 may display a background image in one of the first display area 311 and the second display area 312 and display an application execution screen in the other. If it is recognized that the electronic device 500 is in the unfolded state or in the partially folded state with the angle between the first housing and the second housing falling within a specified second angle range (e.g., between about 120 degrees and 179 degrees), the reconfiguration module 546 may determine the display area as one without dividing the same. The reconfiguration module 546 may configure an area identified to be a blank area in the first display area as the background image display area. The reconfiguration module 546 may configure an area identified to be a blank area in the second display area as the background image display area. If the display area is determined as one without dividing the same, the processor 120 may configure at least a portion of an area identified to be a blank area in the entire display area as the background image display area.

In an electronic device 500 having a bar-type housing structure, according to an embodiment, the reconfiguration module 546 may determine the display area as one without dividing the same. The processor 120 may configure at least a portion of an area identified to be a blank area in the entire display area as the background image display area.

In an electronic device 500 having a slidable housing structure, according to an embodiment, the reconfiguration module 546 may determine the display area as one without dividing the same. The reconfiguration module 546 may configure at least a portion of an area identified to be a blank area in the display area exposed to the outside as the background image display area.

If the background image service module 548 requests information about the number of display areas and the size and position of the background image display area for screen reconstruction, the reconfiguration module 546 may obtain the corresponding information from the second memory area 602 and provide it to the background image service module 548.

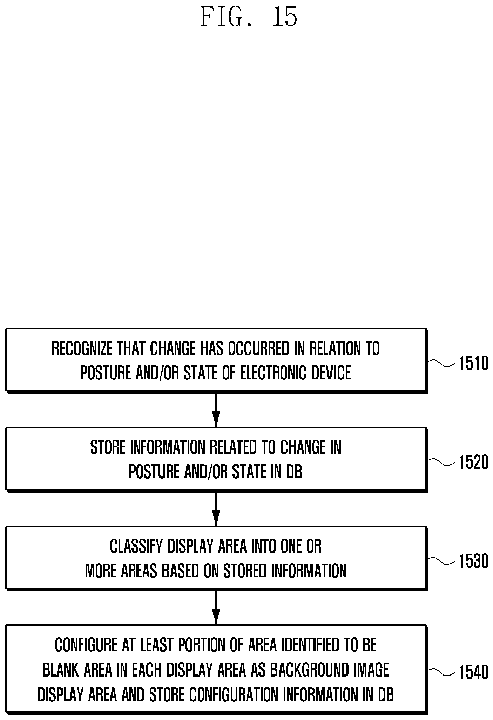

FIG. 15 is a flowchart illustrating operations for managing a database related to a background image display area according to an embodiment. The processor 599 may perform the operations in FIG. 15 by executing the modules 541, 542, 546, and 548 described above. The operations in FIG. 15 may be performed before operation 710 is performed in FIG. 7.

In operation 1510, the processor 599 may recognize that a change has occurred in relation to the posture and/or state of the electronic device 500. Here, the posture change and the state change have been described above (e.g., see the description in FIG. 14), so the description will be omitted.

In operation 1520, the processor 599 may store information related to the change in posture and/or state (e.g., posture information, state information, and angle information) in a database (e.g., the second memory area 602).

In operation 1530, the processor 599 may classify the display area of the display 530 into one or more areas, based on information stored in the database. According to the description above (e.g., see the description in FIG. 14), the display areas may be classified into one or two areas depending on the type of housing structure applied to the electronic device 500.

In operation 1540, the processor 599 may configure at least a portion of an area identified to be a blank area among the classified display areas as a background image display area and store (newly store or update) the configuration information (size and position information) in the second memory area 602.

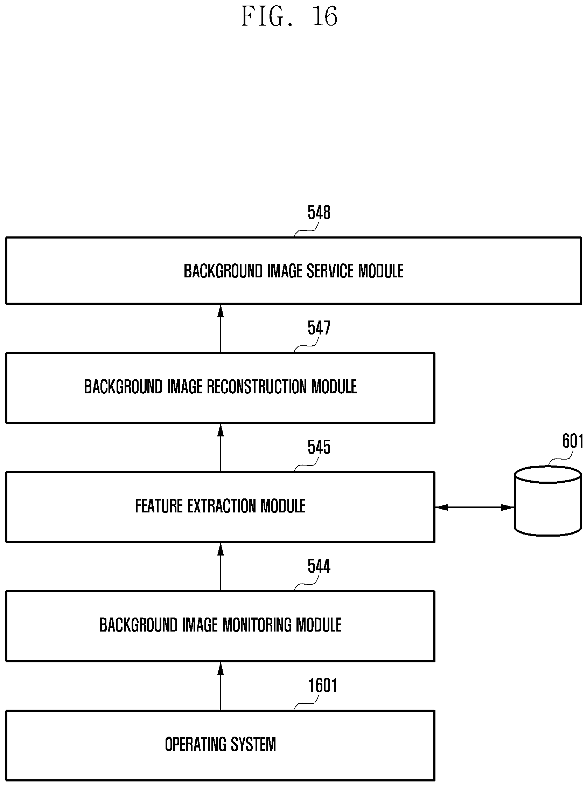

FIG. 16 is a diagram illustrating connections between a background image monitoring module 544, a feature extraction module 545, a background image reconstruction module 547, and a background image service module 548 according to an embodiment.

The feature extraction module 545 may receive, from the background image monitoring module 544, a background image change event to display a second background image by replacing a first background image being displayed on the display 530 as a monitoring result performed by the background image monitoring module 544. The background image change event may be generated by the operating system 1601 and transmitted to the feature extraction module 545 through the background image monitoring module 544.

In response to receiving the background image change event, the feature extraction module 545 may obtain identification information of the second background image. For example, the feature extraction module 545 may calculate a hash value of the second background image as unique identification information of the second background image. The feature extraction module 545 may identify whether unique identification information (hash value) is stored in the first memory area 601 and, if there is unique identification information matching the same as a result of the identification, ignore the event reception without responding. If there is no matching unique identification information as a result of the identification, the feature extraction module 545 may extract feature information from the second background image and store the extracted feature information, together with the second background image and its unique identification information, in the first memory area 601. The feature information stored in the first memory area 601 may include information indicating whether arbitrary reconstruction is allowed for the corresponding background image.

If the reconstruction module 547 requests a background image and its feature information to reconstruct the background image, the feature extraction module 545 may obtain the background image and its feature information from the first memory area 601 and provide them to the background image reconstruction module 547. The reconstruction module 547 may reconstruct the background image to be displayed in the background image display area reconfigured by the reconfiguration module 546. The reconstruction module 547 may provide the reconstructed background image to the background image service module 548.

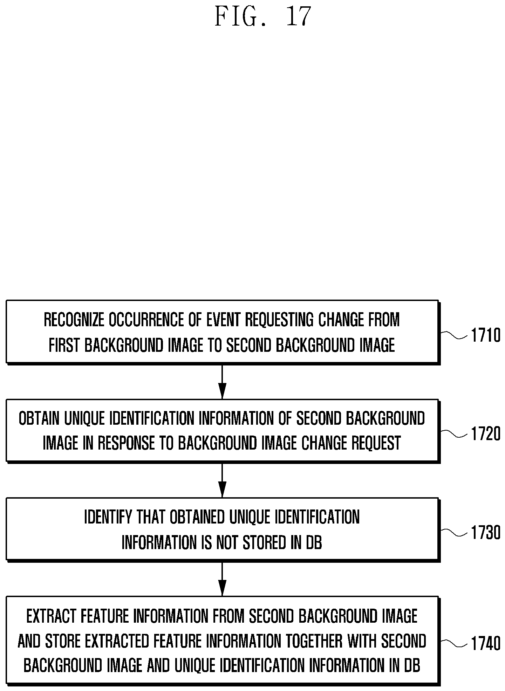

FIG. 17 is a flowchart illustrating operations for managing a database in relation to extracting feature information of a background image according to an embodiment. The processor 599 may perform the operations in FIG. 17 by executing the modules 544, 545, 547, and 548 described above. The operations in FIG. 17 may be performed before operation 710 is performed in FIG. 7.

In operation 1710, the processor 599 may recognize the occurrence of an event requesting a change from a first background image being displayed on the display 530 to a second background image. For example, the background image change event may occur whenever a predetermined period of time elapses or whenever the display 530 is turned off and then turned on.

In operation 1720, the processor 599 may obtain unique identification information of the second background image in response to the background image change request. For example, the processor 599 may calculate a hash value (unique identification information) of the second background image.

In operation 1730, the processor 599 may identify that the obtained unique identification information is not stored in a database (e.g., the first memory area 601).

In operation 1740, the processor 599 may extract feature information from the second background image and store the extracted feature information, together with the second background image and its unique identification information, in the database.

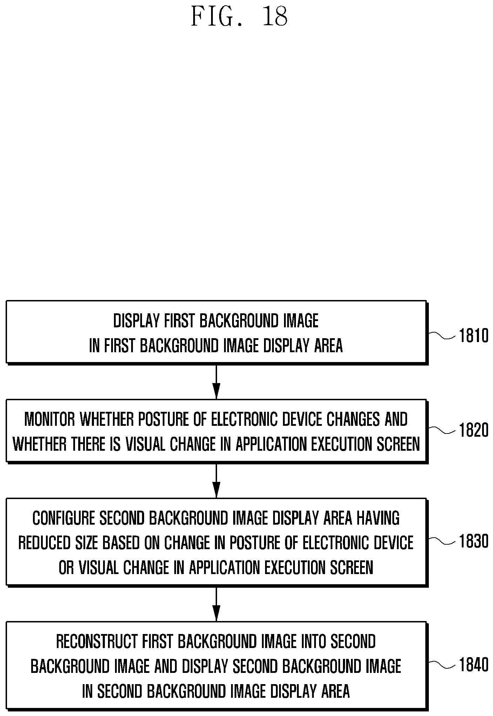

FIG. 18 is a flowchart illustrating operations for providing a background image service according to an embodiment.

In operation 1810, the processor 599 may display a first background image in a first background image display area configured to display a background image in the display area activated to display visual information on the display 530.

In operation 1820, the processor 599, based on data received from the posture sensor 510, may monitor whether the posture of the electronic device 500 changes from a first posture corresponding to a portrait mode to a second posture corresponding to a landscape mode or from the second posture to the first posture. In addition, the processor 599 may monitor whether there is a visual change on the application execution screen in the activated display area.

In operation 1830, based on recognizing a change in the posture of the electronic device 500 or a visual change in the application execution screen, the processor 599 may configure a second background image display area, which is reduced in size from the first background image display area, in the activated display area.

In operation 1840, the processor 599 may reconstruct the first background image into the second background image so as to be displayed in the second background image display area. The processor 599 may display the second background image in the second background image display area.

According to an embodiment, an electronic device (e.g., the electronic device 500) may include: a housing of the electronic device; a display (e.g., the display 530) disposed in the housing; a posture sensor (e.g., the posture sensor 510) configured to generate data used to recognize a posture of the electronic device; a processor (e.g., the processor 599) operatively connected to the posture sensor and the display; and a memory (e.g., the memory 588) operatively connected to the processor and configured to store an application. The memory may store instructions that cause, when executed, the processor to perform operations. The instructions may cause the processor to display a first background image in a first background image display area configured to display a background image in a display area activated to display visual information on the display. The instructions may cause the processor to monitor whether the posture of the electronic device changes from a first posture corresponding to a portrait mode to a second posture corresponding to a landscape mode or changes from the second posture to the first posture, based on data received from the posture sensor. The instructions may cause the processor to monitor whether there is a visual change in an execution screen of the application in the activated display area. The instructions may cause the processor to configure a second background image display area having a size reduced from that of the first background image display area in the activated display area, based on recognizing a change in the posture of the electronic device or a visual change in the application execution screen as a result of the monitoring. The instructions may cause the processor to reconstruct the first background image into a second background image to be displayed in the second background image display area. The instructions may cause the processor to display the second background image in the second background image display area.

The instructions may cause the processor to recognize occurrence of a call event to call the application execution screen to the activated display area, a display end event to terminate display of the application execution screen in the activated display area, or a position change event to change a position of the application execution screen in the activated display area, which is an event indicating a visual change in the application execution screen.

The instructions may cause the processor to configure, based on the recognition of the occurrence of the call event, the second background image display area in the activated display area so as not to overlap the application execution screen.

The instructions may cause the processor to configure, based on the recognition of the occurrence of the position change event, the second background image display area in the activated display area so as not to overlap the application execution screen whose position has changed.

The instructions may cause the processor to configure, based on the recognition of the occurrence of the display end event, the area for displaying the background image from the second background image display area to the first background image display area.

The instructions may cause the processor to reconstruct, based on the display end event not occurring for a specified time from the time at which the call event occurs, the first background image into the second background image.

The instructions may cause the processor to reconstruct, based on the call event not occurring for a specified time from the time at which the display end event occurs, the first background image into the second background image.

The instructions may cause the processor to reconstruct, based on an additional event not occurring for a specified time from the time at which the position change event occurs and a ratio of a blank area that is not occupied by the application execution screen to the activated display area being greater than or equal to a specified value, the first background image into the second background image.

The instructions may cause the processor to reconstruct, based on a ratio of a blank area to the activated display area after the position change event occurs being greater than a ratio of a blank area to the entire display area before the position change event occurs by a specified value or more, the first background image into the second background image.

The housing may be a foldable housing including a first housing, a second housing, and a hinge assembly configured to connect the first housing and the second housing to be rotatable. The display may be a flexible display extending from the first housing across the hinge assembly to the second housing. The electronic device may further include a state sensor (e.g., the state sensor 520) configured to generate data corresponding to an angle between the first housing and the second housing. The instructions may cause the processor to recognize, based on angle data received from the state sensor, that the state of the electronic device changes from a folded state to an unfolded state or from the unfolded state to the folded state. The instructions may cause the processor to configure the second background image display area in the activated display area, based on recognizing a change in the posture of the electronic device, a visual change in the application execution screen, or a change in the state of the electronic device.

The housing may be a slidable housing including a first housing and a second housing configured to slide into or slide out from the first housing. The display may be a flexible display having a part that slides into the first housing as the second housing slides into the first housing. The electronic device may further include a state sensor configured to generate data used to recognize a slide-in state in which a slide-in part of the second housing is received inside the first housing and a slide-out state in which the slide-in part of the second housing slides out of the first housing. The instructions may cause the processor to recognize, based on data received from the state sensor, that the state of the electronic device changes from the slide-in state to the slide-out state or from the slide-out state to the slide-in state. The instructions may cause the processor to configure, based on a change in the posture of the electronic device, a visual change in the application execution screen, or a change in the state of the electronic device, the second background image display area in the activated display area.

The instructions may cause the processor to reconstruct the first background image into the second background image, based on not recognizing an additional state change for a specified time from the time at which a state change of the electronic device is recognized.

The instructions may cause the processor to reconstruct the first background image into the second background image, based on not recognizing an additional posture change for a specified time from the time at which a posture change of the electronic device is recognized.

The instructions may cause the processor to extract feature information from the first background image and reconstruct the first background image into the second background image, based on the feature information including information indicating that reconstruction is allowed.

The instructions may cause the processor to identify a type of the first background image from the feature information. The instructions may cause the processor to reconstruct, based on the identified type, the first background image into the second background image.

The instructions may cause the processor to generate the second background image, based on the identified type being a tile, by reducing the size of the first background image and increasing the number of the first background images so as to fill in the second background image display area.

The instructions may cause the processor to generate the second background image, based on the identified type being an object, by processing the first background image so that a primary object of the first background image is positioned at the center of the second background image display area.

The instructions may cause the processor to generate the second background image, based on the identified type being a landscape, by reducing the first background image to conform to a width or height of the second background image display area while maintaining an aspect ratio of the first background image.

According to an embodiment, a method for operating an electronic device 500 may include displaying a first background image in a first background image display area configured to display a background image in a display area activated to display visual information on a display of the electronic device. The method may include monitoring whether a posture of the electronic device changes from a first posture corresponding to a portrait mode to a second posture corresponding to a landscape mode or changes from the second posture to the first posture, based on data received from a sensor provided in the electronic device. The method may include monitoring whether there is a visual change in an execution screen of an application in the activated display area. The method may include configuring a second background image display area having a size reduced from that of the first background image display area in the activated display area, based on recognizing a change in the posture of the electronic device or a visual change in the application execution screen as a result of the monitoring. The method may include reconstructing the first background image into a second background image to be displayed in the second background image display area. The method may include displaying the second background image in the second background image display area.

The monitoring whether there is a visual change in the application execution screen may include recognizing occurrence of a call event to call the application execution screen to the activated display area, a display end event to terminate display of the application execution screen in the activated display area, or a position change event to change a position of the application execution screen in the activated display area.

## Claims

1. An electronic device comprising:
a housing of the electronic device;
a display disposed in the housing;
a posture sensor configured to generate data used to recognize a posture of the electronic device;
a processor operatively connected to the posture sensor and the display; and
a memory operatively connected to the processor and configured to store an application,
wherein the memory stores instructions that cause, when executed, the processor to:
display a first background image in a first background image display area configured to display a background image in a display area activated to display visual information on the display;
monitor whether the posture of the electronic device changes from a first posture corresponding to a portrait mode to a second posture corresponding to a landscape mode or changes from the second posture to the first posture, based on data received from the posture sensor;
monitor whether there is a visual change in an execution screen of the application in the activated display area;
configure a second background image display area having a size reduced from that of the first background image display area in the activated display area, based on recognizing a change in the posture of the electronic device or a visual change in the application execution screen as a result of the monitoring;
reconstruct the first background image into a second background image to be displayed in the second background image display area; and
display the second background image in the second background image display area.

2. The electronic device of claim 1, wherein the instructions cause the processor to recognize occurrence of a call event to call the application execution screen to the activated display area, a display end event to terminate display of the application execution screen in the activated display area, or a position change event to change a position of the application execution screen in the activated display area, which is an event indicating a visual change in the application execution screen.

3. The electronic device of claim 2, wherein the instructions cause the processor to:
configure, based on the recognition of the occurrence of the call event, the second background image display area in the activated display area so as not to overlap the application execution screen;
configure, based on the recognition of the occurrence of the position change event, the second background image display area in the activated display area so as not to overlap the application execution screen whose position has changed; and
configure, based on the recognition of the occurrence of the display end event, the area for displaying the background image from the second background image display area to the first background image display area.

4. The electronic device of claim 2, wherein the instructions cause the processor to:
reconstruct, based on the display end event not occurring for a specified time from the time at which the call event occurs, the first background image into the second background image;
reconstruct, based on the call event not occurring for a specified time from the time at which the display end event occurs, the first background image into the second background image;
reconstruct, based on an additional event not occurring for a specified time from the time at which the position change event occurs and a ratio of a blank area that is not occupied by the application execution screen to the activated display area being greater than or equal to a specified value, the first background image into the second background image; and
reconstruct, based on a ratio of a blank area to the activated display area after the position change event occurs being greater than a ratio of a blank area to the entire display area before the position change event occurs by a specified value or more, the first background image into the second background image.

5. The electronic device of any one of claims 1 to 4,
wherein the housing is a foldable housing comprising a first housing, a second housing, and a hinge assembly configured to connect the first housing and the second housing to be rotatable,
wherein the display is a flexible display extending from the first housing across the hinge assembly to the second housing,
wherein the electronic device further comprises a state sensor configured to generate data corresponding to an angle between the first housing and the second housing, and
wherein the instructions cause the processor to:
recognize, based on angle data received from the state sensor, that the state of the electronic device changes from a folded state to an unfolded state or from the unfolded state to the folded state; and
configure the second background image display area in the activated display area, based on recognizing a change in the posture of the electronic device, a visual change in the application execution screen, or a change in the state of the electronic device.

6. The electronic device of any one of claims 1 to 4,
wherein the housing is a slidable housing comprising a first housing and a second housing configured to slide into or slide out from the first housing,
wherein the display is a flexible display having a part that slides into the first housing as the second housing slides into the first housing,
wherein the electronic device further comprises a state sensor configured to generate data used to recognize a slide-in state in which a slide-in part of the second housing is received inside the first housing and a slide-out state in which the slide-in part of the second housing slides out of the first housing,
wherein the instructions cause the processor to:
recognize, based on data received from the state sensor, that the state of the electronic device changes from the slide-in state to the slide-out state or from the slide-out state to the slide-in state; and
configure, based on a change in the posture of the electronic device, a visual change in the application execution screen, or a change in the state of the electronic device, the second background image display area in the activated display area.

7. The electronic device of claim 5 or claim 6, wherein the instructions cause the processor to reconstruct the first background image into the second background image, based on not recognizing an additional state change for a specified time from the time at which a state change of the electronic device is recognized.

8. The electronic device of any one of claims 1 to 7, wherein the instructions cause the processor to reconstruct the first background image into the second background image, based on not recognizing an additional posture change for a specified time from the time at which a posture change of the electronic device is recognized.

9. The electronic device of any one of claims 1 to 8, wherein the instructions cause the processor to:
extract feature information from the first background image; and
reconstruct the first background image into the second background image, based on the feature information comprising information indicating that reconstruction is allowed.

10. The electronic device of claim 9, wherein the instructions cause the processor to:
identify a type of the first background image from the feature information; and
based on the identified type, reconstruct the first background image into the second background image.

11. The electronic device of claim 10, wherein the instructions cause the processor to generate the second background image, based on the identified type being a tile, by reducing the size of the first background image and increasing the number of the first background images so as to fill in the second background image display area.

12. The electronic device of claim 10, wherein the instructions cause the processor to generate the second background image, based on the identified type being an object, by processing the first background image so that a primary object of the first background image is positioned at the center of the second background image display area.

13. The electronic device of claim 10, wherein the instructions cause the processor to generate the second background image, based on the identified type being a landscape, by reducing the first background image to conform to a width or height of the second background image display area while maintaining an aspect ratio of the first background image.

14. A method for operating an electronic device, the method comprising:
displaying a first background image in a first background image display area configured to display a background image in a display area activated to display visual information on a display of the electronic device;
monitoring whether a posture of the electronic device changes from a first posture corresponding to a portrait mode to a second posture corresponding to a landscape mode or changes from the second posture to the first posture, based on data received from a sensor provided in the electronic device;
monitoring whether there is a visual change in an execution screen of an application in the activated display area;
configuring a second background image display area having a size reduced from that of the first background image display area in the activated display area, based on recognizing a change in the posture of the electronic device or a visual change in the application execution screen as a result of the monitoring;
reconstructing the first background image into a second background image to be displayed in the second background image display area; and
displaying the second background image in the second background image display area.

15. The method of claim 14, wherein the monitoring whether there is a visual change in the application execution screen comprises
recognizing occurrence of a call event to call the application execution screen to the activated display area, a display end event to terminate display of the application execution screen in the activated display area, or a position change event to change a position of the application execution screen in the activated display area.
